# EUROPEAN PATENT APPLICATION

(11) **EP 1 533 731 A1**
(43) Date of publication of application: **25.05.2005**
(21) Application number: 03764134.7
(22) Date of filing: 07.07.2003
(51) Int. Cl.: G06F 17/60

(54) **PRINT ORDER SLIP ISSUING DEVICE AND PRINT GENERATION SYSTEM**

(30) Priority: 10.07.2002 JP 2002201674; 10.07.2002 JP 2002201682; 10.07.2002 JP 2002201699
(71) Applicant: KONICA MINOLTA HOLDINGS, INC., Tokyo 100-0005 (JP)
(72) Inventor: IKEDA, Hiroshi, 1, Sakura-machi, Hino-shi,Tokyo 191-8511 (JP); SASASE, Naoko, 1, Sakura-machi, Hino-shi,Tokyo 191-8511 (JP); UEMURA, Horoyuki, 1, Sakura-machi, Hino-shi,Tokyo 191-8511 (JP); IGARASHI, Takashi, 1, Sakura-machi, Hino-shi,Tokyo 191-8511 (JP); SAWADA, Katsutoshi, 1, Sakura-machi, Hino-shi,Tokyo 191-8511 (JP)
(74) Representative: Nicholls, Michael John
(86) International application number: PCT/JP2003/008586
(87) International publication number: WO 2004/008359

(57) **Abstract**

A print ordering sheet for group members, which is used via a shop when the group member places an order of print from a photographed image stored in an information recording medium shared by the group members, including:
a displaying section for displaying a visual list including total printed images produced from the photographed images;
a print order assigning section for each printed image on the list;
a control information displaying section for displaying control information relevant to a group;
an identification writing section for writing identification information of the group member; and
an address displaying section for displaying a contact address of the shop.

## Description

### BACKGROUND OF THE INVENTION

The present invention relates to a print ordering sheet issuing device, a print producing system, and an order processing system for ordering image data processing.

Generally, when extra photographic prints are desired by individual members of a group of travelers for example, the representative of the group takes orders for prints (asking the frame number, the print size, and the quantity of prints) for each member. Then the representative makes up the total orders, next, places the order at a photographic shop or a wholesale distributing agent which provides such a printing service.

However, a problem commonly in the above procedure, that is, the representative of the group controls the total orderings of all members, which can be a very large workload for the representative. Additionally, if the order is changed or added, the representative has still more work, in addition each member of the group often pays deference to the representative, resulting in hesitation of order changes.

In APS (Advanced Photo System), a service is provided in which a visible list of each captured image is printed on an index print. The index print is very useful when re-ordering, for selecting the desired images from the available images. Recently, due to digitalization of photographic image, digital photographic services have become common in which photographic prints are formed from image data stored in information recording medium such as a memory card, and an index print is commonly provided by the digital photographic service.

Though above-mentioned index print is useful for checking the available images for re-ordering, there is no other practical use. For example, when an order of prints for available images stored in the information recording medium, such as the memory card, is placed, the user can order only at a print ordering terminal or a web browser on the Internet, where the user cannot typically place an order using the index print.

Recently, due to digitalization of photographic image printing and broad-band applications, photo printing services have developed through the Internet, that is, the printing services via the Internet, or photo album services on the Internet are offered. Further, software is also available on the market, which produces photo-albums on a PC (Personal Computer) and color printers.

However, printing services via Internet are not well known among users and only a limited number of users utilize it. Further, increased are the users of cell-phones and personal communication terminals, by which printing services can be conducted. However, this printing service is often not satisfactory, because of the small size of the display, compared to personal computers.

### SUMMARY OF THE INVENTION

The objective of the present invention is to promote efficient ordering of prints via data which are shared by a group,
further, the objective is to issue a print ordering sheet on which identification information (which are a thumb-nail print, an icon, a file name, and a file size, etc.) stored in the information recording medium are printed for visual reference,
still further, the objective is to complete the print service using the personal communication terminals.

The present invention provides the structures cited below to solve above-described objectives.

### Structure 1

A print ordering sheet for group members, including:
an image list displaying section in which a plurality of frame images are shown;
a print order filling section for each frame image;
a control information displaying section for displaying control information relevant to a specific group;
a section for filling in identification information of individual group members who wish to order prints; and
a contact address displaying section of a print order receiving shop.

Based on Structure 1, since the print ordering sheet for individual group members is composed of:
an image list displaying section in which a plurality of images are shown;
a print order section for each image;
a control information section for displaying control information relevant to a specific group;
a section for filling in identification information of group members who wish to order prints; and
a contact address displaying section of a print order receiving shop,
therefore, each member of the group can place an order at his/her requested time, without obligating any other member of the group.

### Structure 2

A printing order processing system, including:
a registration means for registering information about a specific group,
a generating means for generating control information which controls the group information registered by the registration means, and which also controls the member's common data of the specific group,
a forming means for forming the ordering sheet data for ordering prints via predetermined process of the member's common data, based on the control information generated by the generating means and the member's common data of the specific group, and
an outputting means for printing out an ordering sheet, based on the ordering sheet data which were formed by the forming means,
wherein the forming means forms the ordering sheet data which includes blank columns for the identification information of individual members of the specific group, and on which the control information generated by the forming means has been recorded.

Based on Structure 2, when a member of the group desires to order prints via the predetermined process of the member's common data, the blank columns for the identification information of the group members is provided, and an ordering sheet on which the control information has recorded is issued, whereby, each member of the group can place an order at his/her requested time, without obligating any other member of the group.

### Structure 3

The printing order processing system, including:
a registering means for registering information about a specific group,
   an inputting means for inputting the member's common data of the specific group,
   a generating means for generating control information which controls the group information registered by the registration means, and which also controls the member's common data of the specific group,
   a forming means for forming ordering sheet data for ordering prints via the predetermined process of the member's common data, based on the control information generated by the generating means, and the member's common data of the specific group, and
   an outputting means for printing out the ordering sheet, based on the ordering sheet data which are formed by the forming means,
wherein the forming means forms the ordering sheet data which includes the blank spaces for the identification information of individual members of the specific group, and on which the control information generated by the forming means has been recorded.

Based on Structure 3, when a member of the group desires to order prints via the predetermined process of the member's common data, a fill-in space for identification information of the member is provided, and the ordering sheet on which the control information has recorded is issued, whereby, each member of the group can place a print order at his/her convenience, without obligating any other member of the group.

### Structure 4

The printing order processing system in Structures 2 and 3, wherein the predetermined process of the member's common data indicates a printing process of the member's common data, and
the forming means forms the ordering sheet data for ordering prints via the printing process of the member's common data.

Based on structure 4, each member of the group can place an order of the member's common data, without obligating any other member of the group.

### Structure 5

The printing order processing system in structures 2 and 3, wherein the predetermined process of the member's common data is a process for recording the member's common data onto the information recording medium which is readable by a computer, and
the forming means forms the ordering sheet data for ordering prints via the recording process from the member's common data onto the information recording medium.

Based on Structure 5, each member of the group can place an order of recording the member's common data onto the information recording medium, without obligating any other member of the group.

### Structure 6

The print ordering sheet issuing apparatus in structures 2 and 3, wherein the member's common data inputted via the inputting means includes image data, and
the forming means forms the ordering sheet data, using the thumbnail images of image data inputted via the input means.

Based on structure 6, it is possible to issue an ordering sheet on which the thumbnail images of image data are printed, and the member placing an order can easily check the image to be ordered, at the time the order is placed.

### Structure 7

The printing order processing system in Structures 2 and 3, wherein recorded are the thumbnail image data commonly shared by the specific group or the icon, or the icon for document data commonly shared by the group, and the control information corresponding the identification information of the specific group with the member's common data.

Based on Structure 7, since recorded are the thumbnail images of image data commonly shared by the predetermined group or the icon, or the icon for document data commonly shared by the predetermined group, and the control information corresponding the identification information of the predetermined group with the member's common data, when each member of the group places an order of image data prints, or document data prints, using the print ordering sheet, each member can easily check the data prior to printing.

### Structure 8

The printing order processing system in Structures 2 and 3, further including:
a reading means for reading the data recorded on the information recording medium which is readable by a computer,
a forming means for forming the ordering sheet data for placing the print order of the data, using the identification information of the data read out by the reading means, and
an outputting means for printing out the ordering sheet based on the ordering sheet data formed by the forming means.

Based on structure 8, it is possible to issue the ordering sheet on which the identification information of the data recorded on the information recording medium is printed, and thereby when the member placing an order fills the order contents on the issued ordering sheet, the member can easily check what is being order. Specifically when a plurality of data are recorded on the information recording medium, it is possible to issue the ordering sheet on which the visible list of the identification information of each datum is printed, which further improves the effectiveness of the ordering sheet issuing apparatus.

### Structure 9

The printing order processing system in structure 8, wherein the data recorded in the information recording medium includes the image data,
the reading means reads out the image data recorded in the information recording medium, and
the forming means forms the ordering sheet data, using the thumbnail images of image data which are read out by the reading means, as the identification information.

Based on Structure 9, since the ordering sheet, on which the thumbnail images of the image data recorded in the information recording medium, are printed, when the customer writes the order contents on the issued ordering sheet, the customer can easily check which images are being ordered.

### Structure 10

The ordering sheet issuing apparatus in structure 8, wherein
the data recorded in the information recording medium includes document data,
the reading means reads out the data recorded in the information recording medium, and
the forming means forms the ordering sheet data, using the icon of document data and the document name which are read out by the reading means, as the identification information.

Based on structure 10, the apparatus can issue the ordering sheet on which the document data name and the document data icon recorded in the information recording medium are printed, which further improves the convenience of the ordering sheet issuing apparatus.

### Structure 11

A print producing system, including:
a personal communication terminal, and
a print producing apparatus which produces the print based on the print order via the personal communication terminal, wherein the personal communication terminal includes:
   a specification means for specifying a print sample which is required for placing a print order, among a plurality of print samples having various and differing layouts of image frames, and further, for specifying an image which is to be enclosed within the image frame of the specified print sample, and
   a transmitting means for transmitting the content specified by the specification means to the print producing apparatus,
wherein the print producing apparatus includes:
a memory means for memorizing the data of a plurality of print samples having various and differing layouts of image frames, and the image data possessed by the user of the personal communication terminal,
a receiving means for receiving the specified content sent via the transmitting means,
a reading-out means for reading-out the print sample data and the image data, both of which are specified based on the specified content received by the receiving means, and
a print producing means for enclosing the image data, read out by the reading-out means, into the respective image frames in the print sample data, read out by the reading-out means, based on the specified content received by the receiving means, whereby the prints are produced.

Based on Structure 11, it is possible to place the print order by watching a print sample in which the layout of the image frames have been determined, which enhances the print service using a personal communication terminal.

### Structure 12

The print producing system described in Structure 11, wherein the specification means further specifies a title or comment to be placed along with the image enclosed within the image frame.

Based on Structure 12, it is possible to specify the title or comment to be placed to the image enclosed within the image frame, which makes it possible to produce the print having rich expression.

### Structure 13

The print producing system described in Structure 11, wherein the specification means specifies the image to be enclosed within the image frame, based on thumbnail images of the image data possessed by the user of a personal communication terminal, and the specification information of said thumbnail image.

Based on Structure 13, since the specification means specifies the image to be enclosed within the image frame, based on thumbnail images of the image data possessed by the user of the personal communication terminal, and the specification information of said thumbnail image, the user of the personal communication terminal can easily check the image to be enclosed within the image frame of the print sample.

### Structure 14

A print producing system, including:
a personal communication terminal, and
a print producing apparatus which produces prints based on a print order via a personal communication terminal,
wherein the personal communication terminal includes:
a specification means for specifying the images to be placed on the print order, based on thumbnail images of the image data possessed by the user of personal communication terminal, and the specification information of said thumbnail image: and
a transmitting means for transmitting content, specified by the specification means, to the print producing apparatus,
wherein the print producing apparatus includes:
a memory means for memorizing the image data possessed by the user of the personal communication terminal,
a receiving means for receiving the specified content sent via the transmitting means,
a reading-out means for reading out image data which are specified based on the specified content received by the receiving means, and
a print producing means for producing the prints of image data read out by the reading-out means.

Based on Structure 14, it is possible to place a print order via a personal communication terminal, based on thumbnail images of the image data possessed by the user of personal communication terminal, and specified information of said thumbnail image, which enhances the print service using personal communication terminals.

### BRIEF DESCRIPTION OF THE DRAWINGS

FIG. 1 is a block diagram showing the structure of order processing terminal 1 to which the order processing system of the present invention applies.
FIG. 2 shows the data configuration of information control table 181 stored in information control data base 18.
FIG. 3(a) shows the data configuration of information control table 182 to be stored in information control data base 18.
FIG. 3(b) shows the data configuration of member's common data information 183.
FIG. 4 shows group member application sheet α.
FIG. 5 is a flowchart showing the ordering sheet issuing process which is conducted by order processing terminal 1.
FIG. 6 shows ordering sheet β issued by order processing terminal 1.
FIG. 7 is an outline view of ordering sheet issuing apparatus 101 to which the ordering sheet issuing device of the present invention applies.
FIG. 8 is a block chart showing the interior structure of order issuing machine 101 of the present embodiment.
FIG. 9(a) shows the data configuration of order number table 16a memorized in memory section 116.
FIG. 9(b) shows the data configuration of directory structure correspondence table 16b.
FIG. 10 is a flowchart showing the ordering sheet issuing process which is conducted by ordering sheet issuing machine 101.
FIG. 11(a) shows a hierarchical directory structure of the data recorded in medium A installed in media input section 113.
FIG. 11(b) shows a flat directory structure.
FIG. 11(c) shows directory structure correspondence table 16b.
FIG. 12(a) shows a directory structure of media B carrying the document file.
FIG. 12(b) shows ordering sheet γ to be issued by ordering sheet issuing machine 101.
FIG. 13 shows the overall structure of print producing system 100 to which the present invention applies.

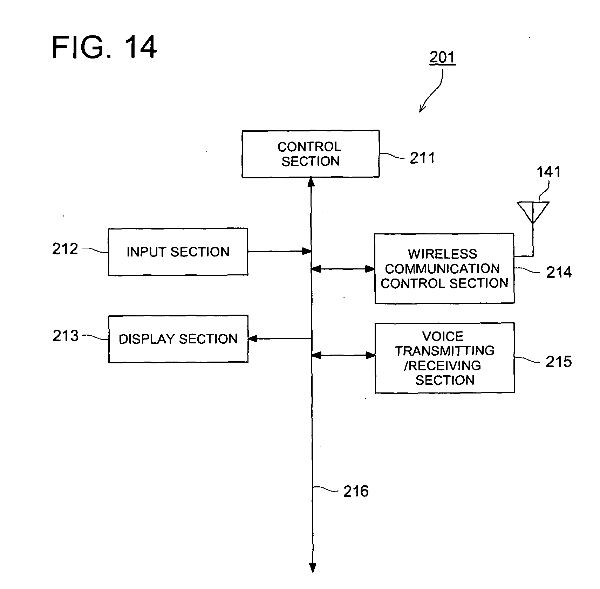

FIG. 14 is a block diagram showing the interior structure of a cellular phone, shown in FIG. 13.
FIG. 15 is a block diagram showing the interior structure of print service server 202, shown in FIG. 13.
FIG. 16(a) shows data configuration of member information 251 stored in group member and image information memory section 225.
FIG. 16(b) shows data configuration of ordering sheet issuing history 252.
FIG. 16(c) shows data configuration of image data information 253.
FIG. 17 shows the examples of the templates for producing a photo-album.
FIG. 18 shows ordering sheet δ which is used for ordering a process (print producing, or media writing) which is performed concerning the image data.
FIG. 19 shows a flowchart of the operation of print service server 202 and cellular phone 201.
FIG. 20 shows a template for ordering a photo-album.
FIG. 21 shows a menu screen and a photo-album ordering screen, both of which are shown in display section 213 of cellular phone 201.
FIG. 22 shows the order content checking screen which is shown in display section 213 of cellular phone 201.
FIG. 23 shows a template ordering sheet screen which is shown in display section 213 of cellular phone 201.
FIG. 24 shows an example of photo-album Z which is produced by a combination of the images in the template.

### DETAILED DESCRIPTION OF THE PREFERRED EMBODIMENT

The embodiments of the present invention will be now described referring to relevant drawings.

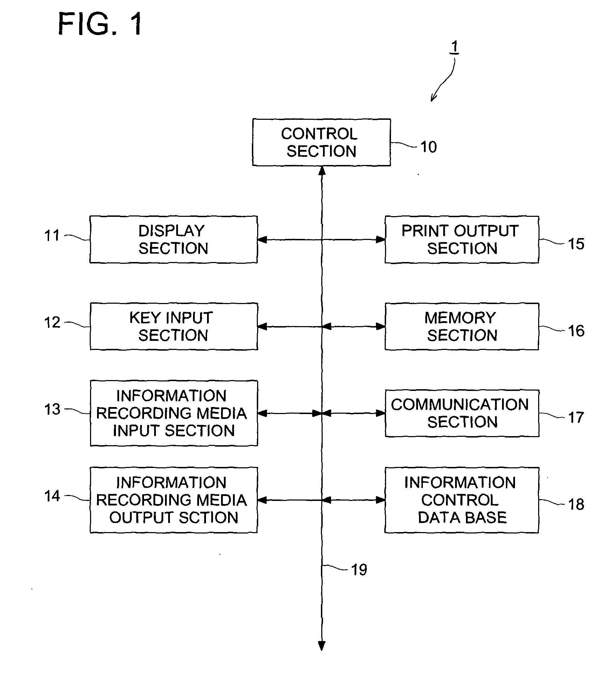

FIG. 1 is a block diagram showing the structure of order processing terminal 1 to which the order processing system of the present invention applies. Order processing terminal 1 is installed at a photo-shop, a wholesale distributing agent, a convenience store, or a drug store, which provides photo services, such as printing services and media writing services. As shown in FIG. 1, order processing terminal 1 is structured with control section 10, display section 11, key input section 12, information recording media input section 13 (hereinafter referred to as media input section 13), information recording media output section 14 (hereinafter referred to as media output section 14), print output section 15, memory section 16, communication section 17, and information control data base 18, and all of which are inter-connected by bus 19.

In this case, each section of order processing terminal 1 is integrally structured, however it is not limited to this, and any of them can stand separately.

Control section 10 incorporates CPU (central processing unit), RAM (random access memory) and ROM (read only memory).

CPU in control section 10 develops the specified program from various programs for order processing terminal 1 stored in ROM onto a work area in RAM, and executes the processing based on the specified program.

RAM in control section 10 develops the processing programs to be executed by CPU, onto the program storage area in RAM, and also stores the input data and the processing results created when the processing program are executed, into the work area. ROM in control section 10 stores
the system program executable in order processing terminal 1,
ordering sheet issuing process program executable in the system program, and
the data to be used by the ordering sheet issuing process program. These programs are formed to be program codes readable by the computer, and stored in ROM. Various programs, such as the executable ordering sheet issuing process program, other than the system program, and the data to be used by the programs can be stored in memory section 16.

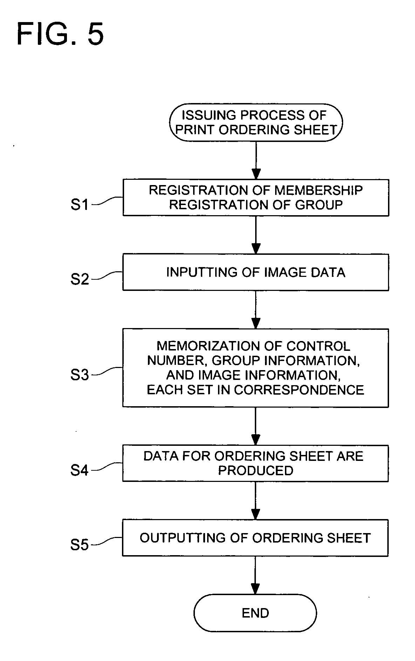

To be more precise, control section 10 executes the ordering sheet issuing process (see FIG. 5) for issuing the ordering sheet for ordering the print order or medium writing order of the image data (hereinafter referred to as "member's common data") owned jointly by the group registered in the photo service. In this case, control section 10 actualizes the functions of the generating means and the forming means described in Structure 2.

Display section 11 incorporates LCD (liquid crystal display) and CRT (cathode ray tube), which performs the requested display processes based on the display signals sent from control section 10. Display section 11 can display either a graphic image or a text, however a combination of graphics and text are also possible. Further, when order processing terminal 1 executes a single operation, display section 11 can be omitted.

Key input section 12 incorporates a ten numeral pad key, a cursor key, and various function keys, which sends operation signals which are generated by pressing specific key, to control section 10. The keys on key input section 12 can be concentrated into one location, or separated at plural locations. Key input section 12 can also include a touch panel integral to the LCD of display section 11.

Media input section 13 is structured to be able to load memory cards, such as a Memory Stick (a registered trademark) a Smart Media (a registered trademark), a Compact Flash (a registered trademark), a Multimedia Card (registered trademark), an SD Memory Card (registered trademark), and a PC card.

Further, media input section 13 incorporates a scanner for reading out film images and print images. This scanner incorporates:
a light emitting section (not illustrated) for radiating light rays onto the film or print, and outputs the captured image recorded on the film as light rays;
a CCD (charge coupled device, which is not illustrated) for transforming the light rays to image signals via photoelectric transformation; and
an analog-digital converter (not illustrated) for converting the image signals to digital image data,
wherein media input section 13 outputs the digital image data read by the scanner to control section 10. Media input section 13 functions as the input means described in Structure 3.

Media output section 14 is structured to be loaded with data writable media, such as: CD-R (CD-recordable), DVD-R (digital versatile disk recordable), MO (magneto optical disk), PC card, Memory Stick (registered trademark), Smart Media (registered trademark), Compact Flash (registered trademark), and Multi Media Card (registered trademark). Media output section 14 performs writing of the data stored in memory section 16, the data recorded in the media loaded on media input section 13, and the digital data of the film image and the print image read by the scanner.

Further, media output section 14 makes it possible to write down the program software for consulting the image data,
the program software for outputting the ordering sheet onto each personal computer, the image file of the ordering sheet, and the program software for placing an order via Internet; onto the information recording medium loaded on recording media output section 14, if necessary.
Still further, media output section 14 can previously write down the necessary data other than the data of customer, onto the loaded information recording medium.

Print output section 15, incorporating a sheet supplying section (which is not illustrated) and a sheet ejection section (which is also not illustrated), prints out the ordering sheet onto a printing sheet based on the control signals from control section 10. Concerning the printing method of print output section 15, available are an inkjet print method, a laser ray method, a thermal dye transfer method, a sublimation transfer method, and a TA method. For the printing sheet, either a roll sheet and cut sheets will be used. Such a printing sheet can be used that the items commonly necessary for the every order are previously printed. Print output section functions as the outputting means of Structure 2.

Memory section 16, incorporating an HD (a hard disk), stores the member's common data inputted from media input section 13 on the after-mentioned ordering sheet issuing process (see FIG. 5). In this case, memory section 16 can be structured to store each file in the member's common data by changing the directory structure inputted from media input section 13 to a flat directory structure, and further, can also be structured to keep the directory structure of the member's common data, and to store it. For storing each file in the member's common data, it is possible to structure to input from key input section 12 whether to keep the directory structure or not. In the above description, memory section 16 is structured to store the member's common data inputted from media input section 13, and it is also possible to structure to store the member's common data in the memory section of an external device, via after-mentioned communication section 17.

Memory section 16 can be structured to store:
various kinds of processing programs necessary for issuing the ordering sheet, a processing program necessary for the group control, and data for these various kinds of processing programs. The various kinds of programs and the data stored in memory section 16 can be re-written from the outside via communication section 17.

Communication section 17, incorporated with a MODEM (modulator-demodulator), a terminal adaptor, and a LAN adaptor, performs communication control to the external devices (being another order processing terminal or a personal computer installed in the shop, or an external server) connected to the communication network, via communication circuits, such as a telephone circuit, an ISDN circuit, and a dedicated circuit.

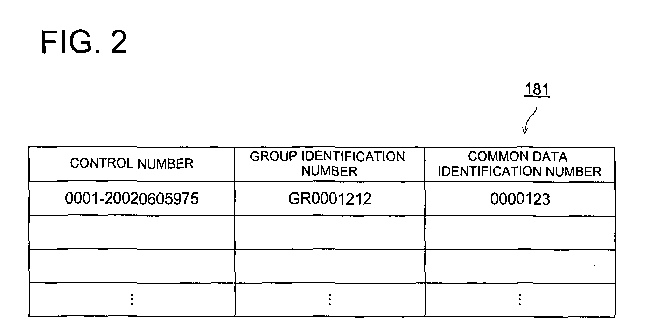

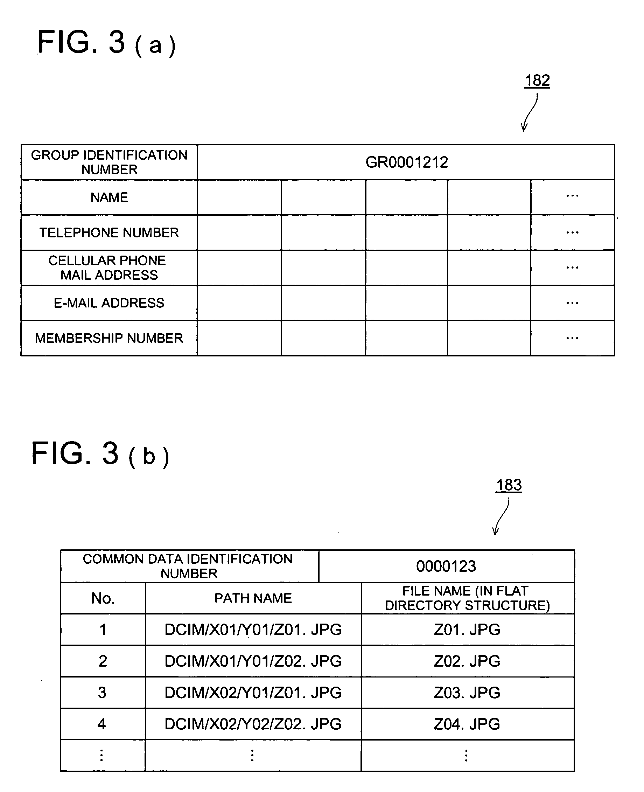

Information control data base 18 stores information control table 181 (see FIG. 2), group information 182 (see FIG. 3(a)), and member's common data information 183 (see FIG. 3(b)), all of which are necessary for issuing the ordering sheet in the order processing system of the present invention. Information control data base 18 controlled by control section 10 functions as the registration means described in Structure 2.

Information control table 181 correlates each item of "control number", "group identification number", and "member's common data identification number", and stores them. In information control table 181, the item "control number" stores the control number which controls group information 182 (see FIG. 3(a)), identified by the after-mentioned group identification number, and also controls member's common data information 183 (see FIG. 3(b)), identified by the after-mentioned member's common data identification number. The control number set in item "control number" is a unique number provided in the photo service system.

Item "group identification number" stores the alpha-numeric control number for identifying the group registered in the photo service, and item "member's common data identification number" stores the alpha-numeric control number for identifying the member's common data for the group of the correlating group identification number.

In group information 182, stored is the information of the member structuring each group registered in the photo service, that is, as shown in FIG. 3(a), stored are "name", "telephone number", "cellular phone mail address", "E mail address" and "membership number", of the members for each group identification number. However, the member information stored in group information 182 is not limited to the above. By increasing the field of the data base, information deemed to be necessary by the service, can be added.

In group information 182, items "name" and "telephone number" respectively store the name and the telephone number or cellular phone number of each member. Item "cellular phone mail address" stores the electronic mail address set in the cellular phone of each member. Similarly item "E-mail address" stores the electronic mail address set in the communication terminal, such as the personal computer, of each member, while item "membership number" stores the membership number of each member.

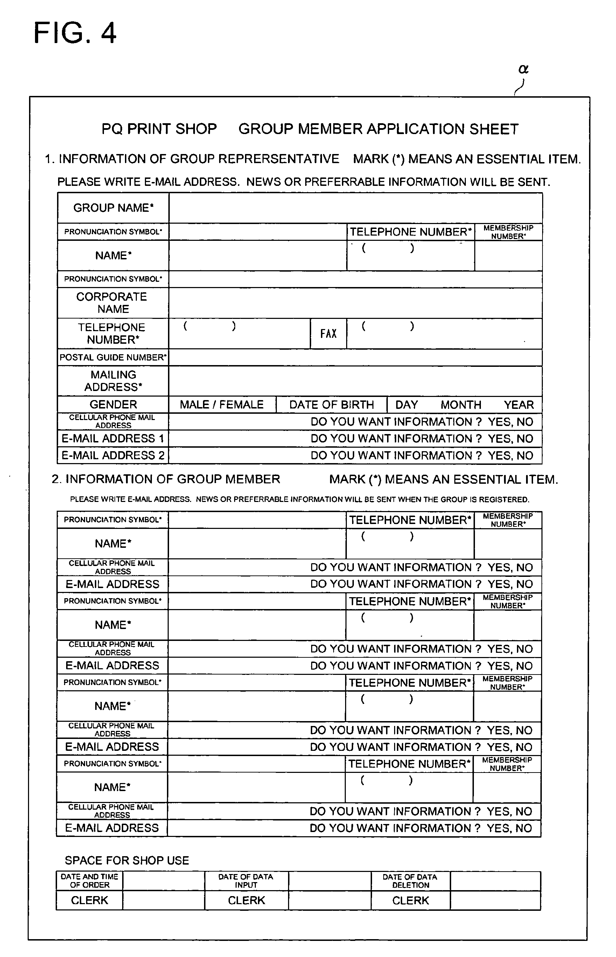

The contents to be stored in group information 182 are determined based on the contents written in group member application sheet α shown in FIG. 4. Group member application sheet α is a document essential for performing a group registration with the photo service. The contents to be filled in group member application sheet α will now be described referring to FIG. 4.

In group member application sheet α, as shown in FIG. 4, on the upper half, provided is section "1. information of the group representative" for filling the information of a representative of the group, while on the lower half, provided is section "2. information of the members" for information of the members.

In group member application sheet α, section "1. information of the group representative" is structured of items "group name", "name", "telephone number", "membership number", "corporate name", "telephone number", "postal guide number", "address", "gender", " date of birth", "cellular phone address", "E mail address-1", and "E mail adderess-2".

Space "group name" in section "1. information of the group representative", is for filling in the name of the group, and space "name", is for filling in the name of the group representative. Space "telephone number" adjacent to "name", is for filling in the telephone number of the group representative (for example, the telephone number of his/her home). Further, "membership number" is the space for the membership number of the representative. While membership number to be written in item "membership number" is written after the registration of group is completed. Spaces "group name", "name", and "telephone number" adjacent to "name" are also essential. These items (which are "group name", name", and "telephone number") are essential for identifying the individual to be communicated.

"Corporate name" provides a space for filling in the name of the company of which the customer is a member. Spaces "telephone number" and "FAX", below item "corporate name", are provided for the telephone and FAX numbers of the company. Obviously, if the group does not belong to any company, these spaces are left blank.

"Postal guide number" and "mailing address", are for the postal guide number and mailing address of the group representative, and "gender" and "date of birth" are for the spaces for filling in the gender and the date of birth of the group representative. "Mailing address" is essential.

"Cellular phone mail address", is for filling in E-mail address of the cellular phone of the group representative, while "E-mail address 1" and "E-mail address 2" are for the E-mail addresses set in the communication terminals, such as the personal computers of the group representative.

The reason for detailed information of the group representative to be given is to assure delivery of the print orders of the group members.

In group member application sheet α, section "2. information of group member" includes species for "name", "telephone number", "membership number", "cellular phone mail address", and "E-mail address".

In section "2. information of group members", spaces "name" are for filling in the name of each group member, other than the group representative. Spaces "telephone number" adjacent to spaces "name" are for filling in the telephone number (for example, telephone number of the home) of each group member. Further, spaces "membership number" are for filling in the membership number of each group member. The number to be written in space "membership number" is written after the registration of the group is completed. "Name" and "telephone number" are essential.

In "cellular phone mail address", the space for filling in E-mail address of the cellular phone of each group member, other than the representative is provided, and in "E-mail address 1" and "E-mail address 2", the spaces for filling in the E-mail address of the communication terminal, such as a personal computer, of each group member, are provided.

In the above description, shown is the registration data of a group with the photo service, by filling in group member application sheet α, however the registration of a group is not limited to this. For example, accessing a group member registration page via the communication terminal, such as the personal computer, and inputting the necessary items into the filling form displayed on the group member registration page, the registration of group can be completed.

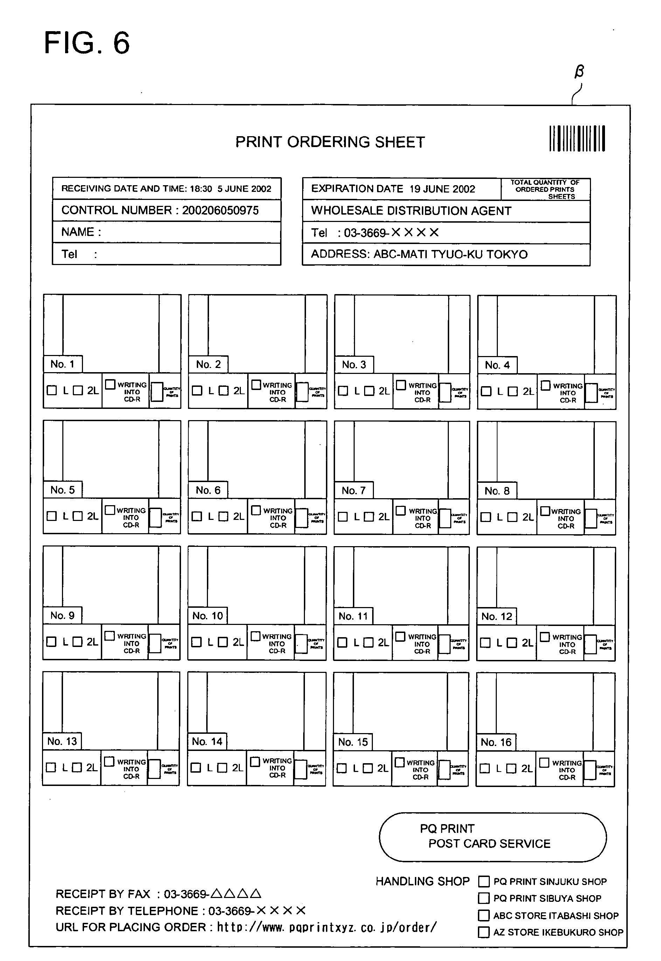

As shown in FIG. 3(b), with respect to each member's common data identification number, "No.", "path name" and "file name (in the flat structure)" are corresponding to each other and stored in member's common data information 183. In this member's common data information 183, item "No." stores the file numbers given to each file in the member's common data. The file number set in the item "No." is a unique number set in a single member's common data identification number, and these file numbers are to be printed on the print ordering sheet β (see FIG. 6). On print ordering sheet β for the group members, shown in FIG. 6, the file numbers set on the item "No." are corresponding to numbers No.1, No.2, No. 3, -----, given to each thumbnail image.

In member's common data information 183, item "path name" stores directory paths of each file in the member's common data, item "file name (in the flat structure)" stores the file names given by control section 10 to identify each file of item "path name". The file name set in item "file name (in the flat structure)" is a file name generated when the directory structure of the member's common data was re-constructed to a flat directory structure.

The embodiment of the present invention will now be explained. Explained via flowchart in FIG. 5, will be the issuing process of the print ordering sheet, which is conducted by order processing terminal 1.

Information about individual group members is written on group member application sheet α, shown in FIG. 4, then the representative of the group gives this group member application sheet α to the shop having order processing terminal 1, where a clerk inputs the described contents of group member application sheet α into order processing terminal 1. Control section 10 gives a unique group identification number to the group, and registers the group identification number as well as the above inputted contents (names of group members, telephone numbers, etc.) onto group information 182 of information control data base 18.

In this case, the clerk can input the data via key input section 12 of order processing terminal 1, or the clerk can input via an external device connected to order processing terminal 1 through a network, through communication section 17. If any group member is habituated to the computer operation, the group member can also input information about group members, described on group member application sheet α, via the external input device.

Next, the member's common data, stored in step 1, are inputted by media input section 13 (step 2), control section 10 stores the inputted member's common data in memory section 16, and attaches the unique member's common data identification number to the inputted member's common data. Further, control section 10 gives the file number to each file in the inputted member's common data, and gives a file name (in the flat structure) to identify each file. Still further, control section 10 stores the member's common data identification number corresponding to the file numbers and the file names (in the flat structure), into member's common data information 183 in information control data base 18. The member's common data can also be inputted via any external input section other than media input section 13, using any publicly known communication means.

Next, control section 10 gives a unique control number to the combination of the group identification number and member's common data identification number. The control number, the group identification number and member's common data identification number are correspondent each other and stored in information control table 181 (step S3).

Next, control section 10 creates the order sheet data (step S4), based on the member's common data stored in memory section 16 and information stored in control information DB18. During the creation of the order sheet data, in order to form prints for visual reference on the order sheet, with respect to the each file in the member's common data stored in memory section 16, control section 10 creates a thumbnail image for each image file.

To complete the issuing process of the print ordering sheet, control section 10 prints out the order sheet from print output section 15 (step S5), based on the order sheet data created in step S4.

In this case, the print ordering sheet outputted in step S5 can be a single sheet, or plural sheets for each of the plural group members. Further, before outputting the print ordering sheet in step S5, it is also possible to input the quantity of the sheets to be outputted, via key input section 12. In the case that a single print ordering sheet has been issued, the group representative may duplicate the sheet and give one to each group member. Each group member can place an order for prints or writing the media, at each wanted time, using the given print ordering sheet.

FIG. 6 shows an example of ordering sheet β which is outputted in step S5 in FIG. 5. On ordering sheet β, the spaces for "order receiving date and time", "control number", "name" and "Tel" are provided at the upper left, and "expiration date", "total quantity of ordered prints", "wholesale distributing agent", "Tel" and "address" are provided at the upper right.

Regarding "order receiving date and time" of the upper left side of ordering sheet β, the date and time of issuing ordering sheet β is printed as the date and time of receiving the print order. Regarding "control number", the number which was set on the item "control number" in information control table 181 (see FIG. 2) is printed. At the upper right of ordering sheet β, a bar code number corresponding to the number printed in "control number" is printed. Regarding "name" and "Tel" at the upper left of ordering sheet β, the spaces for listing the names and telephone numbers of the individual group members who order prints are provided.

Regarding "expiration date" at the upper right of ordering sheet β, the expiration date for the print order received at the above receiving date and time is printed. "Total quantity of ordered prints" shows the total quantity of that print order. On the items of "wholesale distributing agent", "Tel" and "address" of the upper right of ordering sheet β, the name of the shop which received the print order (the name of wholesale distributing agent), the shop's telephone number, and the shop's address, are printed respectively.

Further, on ordering sheet β, a thumbnail print of each image file in the member's common data inputted in step S2 in FIG. 5 is printed for visual reference like the index prints, including the file number of each thumbnail image. In this case, the thumbnail images, printed on ordering sheet β, can be color prints or monochrome prints. It is further possible to input whether the thumbnail image to be printed is to be a color print, via key input section 12.

Still further, under the thumbnail image, there are a space for selecting print size (for example, L size being 89 x 127 mm, and 2L size being 127 x 178mm), a space for reserving CD-R writing, and a space for writing the quantity of ordered prints. In this case, the file numbers (No.1, No.2, ---) shown for each thumbnail image are the numbers which are set in the item of "No." in member's common data information 183 (see FIG. 3(b)).

At the lower right of ordering sheet β, news of the districts, or an advertisement of the photo service shop may be printed. Advertisements on ordering sheet β would be less expensive compared to advertisements in a newspaper.

For receiving the print order by ordering sheet β, the FAX number, telephone number and URL (Uniform Resource Locator) are printed at the lower left of ordering sheet β.

In case of placing the print order via facsimile, the customer (any member of a group) can send ordering sheet β, on which the necessary items (name, Tel, print size, and the quantity of prints) have been written, to the listed FAX number of "Receipt by FAX".

In case of placing a print order via telephone, the customer calls the number specified in "Receipt by telephone", and verbally conveys the order information, such as control number, name, telephone number, print size, and the quantity of prints.

In case of placing a print order via a communication terminal, such as a personal computer, the customer accesses the URL specified in "URL for placing order", to input the necessary information, such as control number, name, telephone number, and order contents, onto an ordering sheet, and sends it to the specified URL.

As stated above, based on order processing terminal 1 of the present embodiment, a unique control number is assigned to the member's common data of a certain group (member's common data identification number) and information of the group (group identification number), to be recorded, and further, a print ordering sheet having spaces for writing essential identification information (name, telephone number, etc) of members of the group is issued. Thus, using the issued print ordering sheet, each member of the group may place an order for prints of the images or writing on the media at any desired time, without obligating the other members.

Still further, since identification information (name, telephone number, etc) of a member is not printed on the print ordering sheet issued by order processing terminal 1, but is written by the customer, it is not likely that wrong information is placed on the print ordering sheet.

Print ordering sheets on which hand written information is given allow customers who do not have a personal computer to easily place print order, which can increase the number of customers of the photo service.

Further, since the ordering sheet carries thumbnail images of each file in the member's common data, the customer (being a group member) can easily check the image being ordered, when placing the print order.

Incidentally, the described contents of the present embodiment are changeable as long as they meet the purpose of the present embodiment.

For example, in the present embodiment, the member's common data inputted via media input section 13 are the image data, however, document data can also be inputted, in which icons and file names for each file in the document data are printed on the ordering sheet, and a space for writing the number of copies of the file is preferably provided.

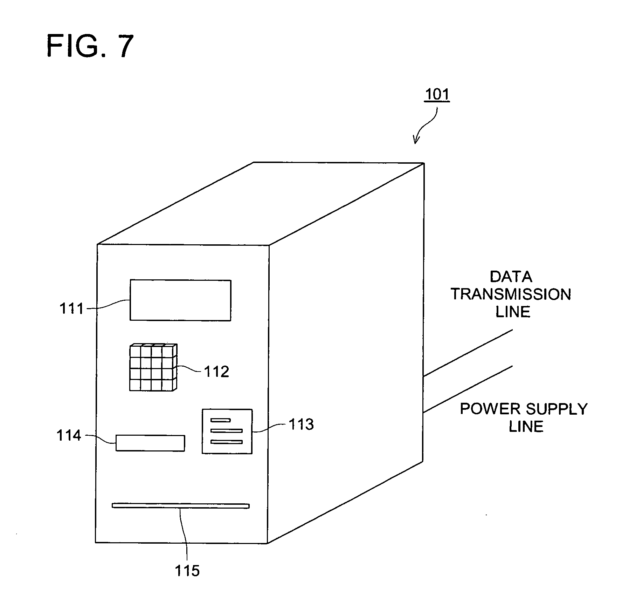

FIG. 7 is an overall view of print ordering sheet issuing apparatus 101, employing the print ordering sheet issuing apparatus of the present invention. Print ordering sheet issuing apparatus 101 may be installed in a specialty store, at a wholesale distributing agent, a convenience store, or a drug store, offering an image printing service. Display section 111, key input section 112, media input section 113, media output section 114, and print output section 115 are provided on the front panel of print ordering sheet issuing apparatus 101, shown in FIG. 7. The constructions of each section is detailed later.

Display section 111, key input section 112, media input section 113, media output section 114, and print output section 115 are united with each other in print ordering sheet issuing apparatus 101 shown in FIG. 7. However, without limiting to this construction, one or more sections can be separately structured.

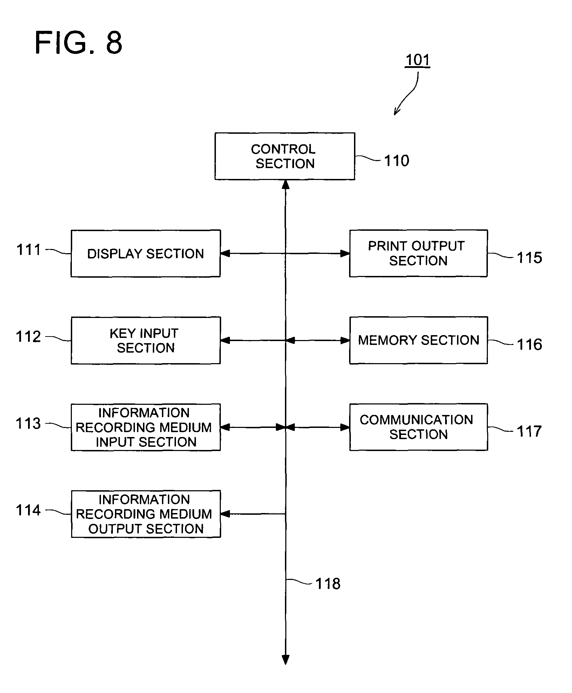

Next, the internal construction of print ordering sheet issuing apparatus 101 will be described referring to the block diagram in FIG. 8. Print ordering sheet issuing apparatus 101 is structured of control section 110, display section 111, key input section 112, media input section 113, media output section 114, print output section 115, memory section 116, and communication section 117, each being connected by bus 118.

Control section 110 is structured of CPU (central processing unit), RAM (random access memory) and ROM (read only memory).

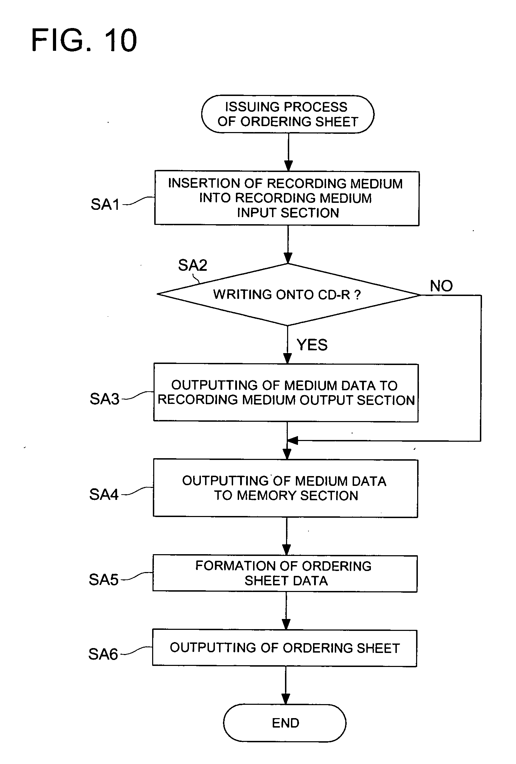

CPU in control section 110 develops the program specified from the various programs stored in ROM for print ordering sheet issuing apparatus 101, onto a working area in the RAM, and carries out the process based on the program. Specifically, when the information recording medium is loaded into media input section 113, control section 110 performs the process of issuing a print ordering sheet of the data stored in the information recording medium (see FIG. 10).

RAM in control section 110 develops the processing program to be performed by CPU into the program storing area in RAM, and stores the processed results, created when the input data or the above processing program are performed, into the working area.

ROM in control section 110 stores:
a system program which can be performed in print ordering sheet issuing apparatus 101, and
a print ordering sheet issuing program which can be performed in the system program, and
data to be used by the print ordering sheet issuing program.

These programs are formed as program codes readable by a computer, and stored in the ROM. Further, a structure is also possible such that the performable print ordering sheet issuing program, other than the system program and the data, are stored in memory section 116.

Control section 110 has the functions as a reading means and a forming means described in the summary paragraph of the invention.

Display section 111 is structured by an LCD (liquid crystal display) and a CRT (cathode ray tube), and performs a display process based on the display signals inputted via control section 110. Display section 111 can perform the display of graphics, or text, or both graphics and text. Still further, if print ordering sheet issuing apparatus 101 performs only a single operation, display section 111 can be omitted.

Key input section 112 is structured by a ten numerical key pad, a cursor key, and various function keys, and outputs the operation signals created by pressing the appropriate key to control section 110. The keys in key input section 112 can be laid in a single place, or separated into plural places. Further, key input section 112 can include a touch panel which is united with the LCD of display section 111.

Media input section 113 mounts or dismounts various memory cards, such as a Memory Stick (a registered trade mark), a Smart Media (a registered trade mark), a Compact Flash (a registered trade mark), a Multi-Media card (a registered trade mark), and an SD Memory card (a registered trade mark), all of which are media storage means of digital cameras.

Media output section 114 mounts or dismounts various memory devices, such as CD-R, DVD-R, MO (magneto optical disk), PC card, Memory Stick (a registered trade mark), Smart Media (a registered trade mark), Compact Flash (a registered trade mark), and Multi-Media card (a registered trade mark), all of which can record image data. Media output section 114 performs writing of the data recorded in medium A loaded in media input section 113. After writing the data onto medium A in media output section 114, medium A is returned to the customer.

According to need, media output section 114 can also simultaneously write:
software for sending around the contents recorded in medium A to other members;
software for outputting the print ordering sheet onto the computer of the customer;
an image file of the print ordering sheet; and
software for placing an order of the prints via the Internet;
on the information recording medium loaded in media output section 114.

Further, media output section 114 can write in advance, the necessary data, other than the data of the customers, onto the loaded medium.

Print output section 115 is structured by a sheet supply section and a sheet receiving section, neither of which are illustrated, and prints out the print ordering sheet onto a printing sheet, based on the control signals from control section 110. Concerning the printing method of print output section 115, employable are an inkjet method, a thermal-transfer method, a laser ray method, a dye sublimation method, and a TA method. A continuous-form sheet (rolled paper), or cut sheets can be used for the printing sheet. Specifically, for the printing sheet, common items which are necessary for every order are preferably printed in advance. Print output section 115 functions as an output means described in the summary paragraph of the invention.

Memory section 116, having HD (hard disk), stores the recorded contents of medium A loaded in media input section 113 as well as the various programs necessary for issuing the print ordering sheet. These programs and data can be rewritten from the outside via communication section 117.

Further recording section 116 stores ordering number table 16a in which ordering numbers are assigned to each information recording medium. Ordering number table 16a stores "numbers for the interior system" and "numbers to be outputted on the print ordering sheet, both of which correspond with each other for each information recording medium. The ordering numbers stored in each item of order number table 16a are assigned in the issuing process of the print ordering sheet, described later (see FIG. 10).

In ordering number table 16a, the item of "number for interior system" stores the unique numbers used in every shop (nationwide photographic shops or wholesale distributing agents which provide such a printing service).

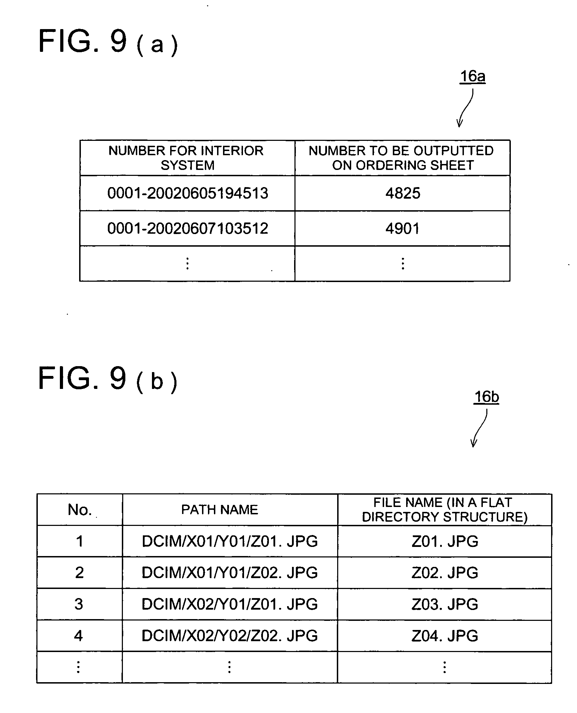

Further, on ordering number table 16a, the item "number to be outputted on ordering sheet" stores the number used for each shop providing a printing service. "Number to be outputted on ordering sheet" is actually printed on the print ordering sheet, issued by print ordering sheet issuing apparatus 101. The number stored in the item "number to be outputted on ordering sheet", shown in FIG. 9(a), has a smaller number which is smaller than "number for the interior system". For example, a numeral of four or five digits is applied, which is easier for checking or deciding the ordering number for the clerk or the customer. The numeral is preferably used for "number to be outputted on the ordering sheet", but is not limited to numerals, and an assorted alphabets can also be used.

Still further, memory section 116 stores directory structure correspondence table 16b, in which the corresponding relationship between the directory structure of medium A loaded in media input section 113, and the flat directory structure. This directory structure correspondence table 16b is formed in the issuing process of print ordering sheet, will be described later (see FIG. 10).

Directory structure correspondence table 16b stores items "No.", "name of path" and "file name (in the flat structure)", each being correspondent. In directory structure correspondence table 16b, "No." shows the file numbers given to each file in medium A, these file numbers are to be printed out on the print ordering sheet (see FIG. 6). In print ordering sheet α shown in FIG. 6, the file numbers set in the item "No." are corresponding to the numbers of No.1, No.2, No.3 -----, which are given to each thumbnail image.

In directory structure correspondence table 16b, the item "path name" shows the directory path of each file in medium A, the item "file name (in the flat structure)" shows the file name given by control section 110 to identify each file of the item "path name". The file name, set in the item "file name (in the flat structure)", is the name when the directory structure of medium A is re-structured to the flat directory structure.

In the above mentioned case, memory section 116 changes the directory structure of medium A to the flat directory structure, and stores each file in medium A, however, it is also possible to retain and store the directory structure of medium A. Further, when each file in medium A is stored, it is possible to determine whether the directory structure is to be retained, via key input section 112. Further, in the above description, memory section 116 stores each file in medium A, however, it is possible to store each file in medium A in the memory section of the external apparatus, via communication section 117, to be described later.

Communication section 117 is structured by a MODEM (modulator-demodulator), a terminal adaptor and a LAN adaptor. Communication section 117 controls communication to the external devices (which are another ordering sheet issuing apparatus or personal computer, both of which are installed in the shop, and an external server) which are connected to the communication network, via the communication circuit, such as a telephone circuit, an ISDN (integrated services digital network) or a leased circuit.

Next, the operation of the present embodiment will be detailed.

Referring to the flowchart in FIG. 10, the print ordering sheet issuing process which is conducted by print ordering sheet issuing apparatus 101 will be explained.

CD-R is loaded onto media output section 114, and customer's medium A is inserted into media input section 113 (step SA1). Control section 110 starts the reading operation about the data recorded in medium A, and displays "Do you wish to make a CD-R ?" on display section 111. Control section 110 awaits the decision by the operator whether the data in medium A are to be written onto the CD-R loaded onto media output section 114 (step SA2).

In step SA2, when the formation of CD-R is reserved via key input section 112 (that is, "YES" in step SA2), control section 110 outputs the recorded contents in medium A onto media output section 114 (step SA3), and writes the recorded contents onto a CD-R loaded in media output section 114. When the formation of CD-R is not reserved in step SA2 (that is, "NO" in step SA2), control section 110 advances the step to step SA4.

Control section 110 outputs the recorded contents of medium A onto memory section 116, and starts the writing operation of the recorded contents (step SA4). For this writing operation onto memory section 116, control section 110 allocates the ordering numbers (No. for the internal system, and No. for outputting the print ordering sheet) to medium A, and stores the allocated numbers in ordering number table 16a. Further, control section 110 forms directory structure correspondence table 16b which corresponds with medium A, and stores table 16b in memory section 116.

In the following description, concerning the numbers allocated to medium A, No. for the internal system is shown (see FIG. 9(a)) as ID1 (ID1 = 0001-20020605194513), and No. for outputting the print ordering sheet is shown as "4825".

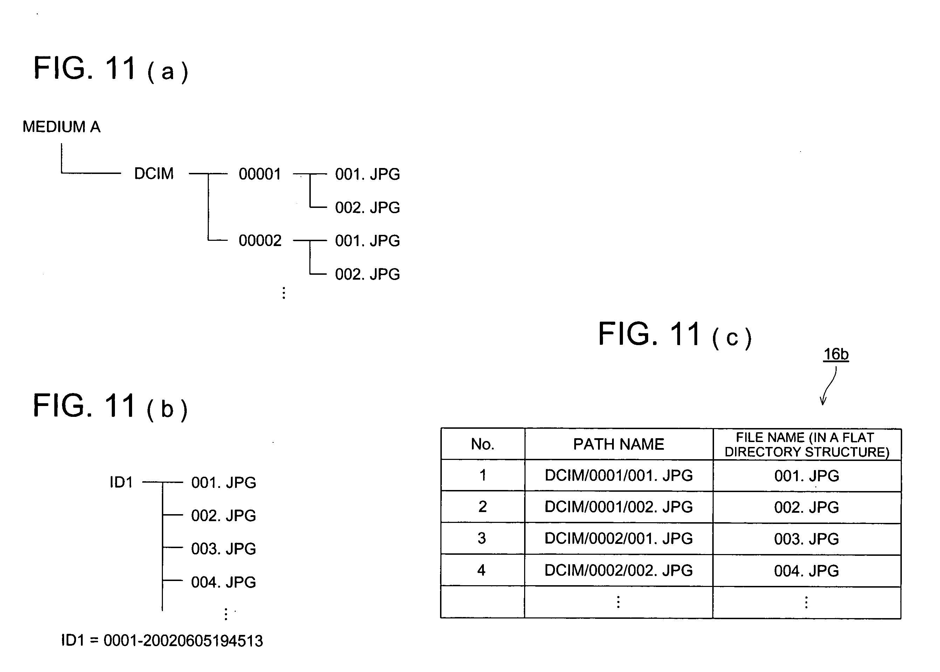

Control section 110 forms directory structure correspondence table 16b for medium A. During the formation of directory structure correspondence table 16b, control section 110 firstly allocates a file number to each file in medium A. If the directory structure of medium A employs a hierarchical structure as shown in FIG. 11(a), control section 110 allocates a file name for specifying the file to each file in medium A, and changes the hierarchical directory structure to the flat directory structure (see FIG. 11(b)).

Control section 110 forms directory structure correspondence table 16b (see FIG. 11(c)), in which the file number (No.), the directory path in the hierarchical structure, and the file name (in the flat structure) in the flat directory structure correspond. Memory section 116 stores each file in medium A, using the flat directory structure as shown in FIG. 11(b).

In the hierarchical structure shown in FIG. 11(a), file 001.JPG, and file 002.JPG, both having the same file name, are stored. However, in directory structure correspondence table 16b shown in FIG. 11(c), file name 0001.JPG and file name 002.JPG are respectively allocated to 001.JPG and 002.JPG in folder 0001, while file name 003.JPG and file name 004.JPG are respectively allocated to 001.JPG and 002.JPG in folder 0002. That is, different names are allocated to each file in medium A, and thereby it is possible to specify the individual files.

When the recorded contents in medium A include application files (being files having the extension "EXE" or "COM") other than image files or document files, control section 110 excludes the application files, and allocates a file name in the flat directory structure to each datum other than the application files, and stores them in memory section 116. In this case, document file are files formed, for example, by the various word processors, HTML (hypertext markup language), or PDF (portable document format).

After the data is written in step S4, control section 110 forms the data for a print ordering sheet, based on the data written in memory section 116 (step S5). During this formation of the print ordering sheet, in order to produce the visual reference prints of the images on the print ordering sheet, control section 110 produces a thumbnail image for each image file which was written in memory section 116 in step SA4. Further, control section 110 allocates the predetermined icon to each document file, which was written in memory section 116 in step SA4.

Next, control section 110 prints out the print ordering sheet (step SA6) from print output section 115, based on the data of print ordering sheet which were formed in step SA5, and completes the issuing process of the print ordering sheet.

FIG. 6 shows an example of ordering sheet β for medium A in which all of the recorded contents are structured of the image files. As shown in FIG. 6, ordering sheet β includes the items "receiving date and time", "control number", "name", and "Tel", each at the upper left corner, and the items "expiration date", "total number of ordered print", "wholesale distribution agent", "TEL", and "address", each at the upper right corner.

In the item "receiving date and time" of the upper left corner of ordering sheet β, the issuing date and time of ordering sheet β is printed as the date and time of receiving the order of printing. In the item "ordering number", the number, which was set in No. for outputting the ordering sheet in ordering number table 16a (see FIG. 9a), is printed. In the case of medium A, No. for the interior system is ID1 (ID1 = 0001-20020605194513), and "4825" is printed in the item of "ordering number" (see FIG. 9(a)). A bar-code ordering number can be put down with "4825". The items "name" and "TEL", each existing on the upper left of ordering sheet β, are for writing the name and telephone number of the customer.

In the item "expiration date" at the upper right of ordering sheet β, the expiration date of the printing order received on the above receiving date and time is printed. The item "total quantity of ordered prints" is for writing the total quantity of the ordered prints. While the items "wholesale distribution agent", "Tel" and "address", which exist at the upper right of ordering sheet β, are for printing the name, telephone number and address of the shop (wholesale distribution agent)".

Further, on ordering sheet β, the thumbnail images of the image data in medium A are printed, each of which has a printed file number. Under the thumbnail image, provided are spaces for selecting the print sizes (for example, L-size being 89 x 127 mm, 2L-size being 127 x 178 mm), a space for ordering the writing service onto a CD-R, as well as a space for writing the number of desired prints. The file numbers (No.1, No.2, ---) are the numbers which were set in the item of "No." of directory structure correspondence table 16b for medium A (see FIG. 11(c)). Further it is also possible to put down with the bar-coded file numbers for each thumbnail image on ordering sheet β. A fax number, telephone number and URL (uniform resource locator) for receiving the order via ordering sheet β are printed at the bottom.

Still further, on ordering sheet β, it is also possible to print additional information, such as local news or an advertisement of the shop which provides the photo service. As shown at the bottom right of ordering sheet β in FIG. 6, Further, on ordering sheet β, it is possible to print the names of the plural shops at which the customer can receive the finished prints. Then the customer can sign a mark to show the desired shop for receiving the finished prints, if necessary.

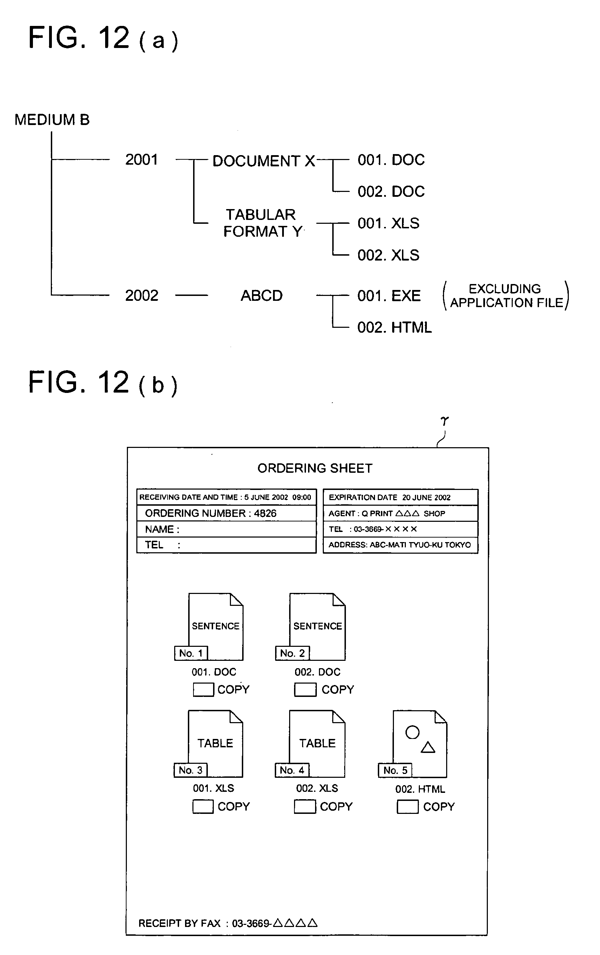

FIG. 12(a) shows the directory structure of medium B in which document files are recorded. FIG. 12(b) shows an example of ordering sheet γ which was issued based on the recorded contents in medium B. In this case, files, other than executable files (for example, the extension is application file 001.EXE in Windows), are stored in memory section 116, and the icons corresponding to the files other than 001.EXE are printed on ordering sheet γ, as shown in FIG. 12 (b) .

On ordering sheet γ, the icons of the document files recorded in medium B are printed, and respective file numbers (No.1, No.2, ----) are printed for each document file. It is also possible to include bar-coded file numbers on ordering sheet γ. Since each file cannot be specified by an only icon on ordering sheet γ, a descriptive file name of said document file is printed under each icon. Further, a space for writing the number of desired prints is provided under each file name. When the image file and the document file coexist in a single information recording medium, both the thumbnail image of the image file and the icon of the document file are printed on an ordering sheet having the same order number.

The customer writes the necessary items, such as name, telephone number, print size and the quantity of the prints, on the ordering sheet, which was issued in the above manner, and then places the order of the prints. The customer can place an order at the shop, or can also place an order at a place other than the shop, via telephone or Internet. After receiving the order, based on the ordering number on the ordering sheet, the shop specifies the data to be printed from the data stored into memory section 116, and then carries out the print production.

According to print ordering sheet issuing apparatus 101 of the present embodiment, when the information recording medium offered by the customer is loaded, apparatus 101 automatically reads the data recorded in the information recording medium, and automatically issues a print ordering sheet for ordering prints of the data, that is, apparatus 101 can efficiently issue a print ordering sheet. Further, the customer can obtain a print ordering sheet without assistance from a clerk.

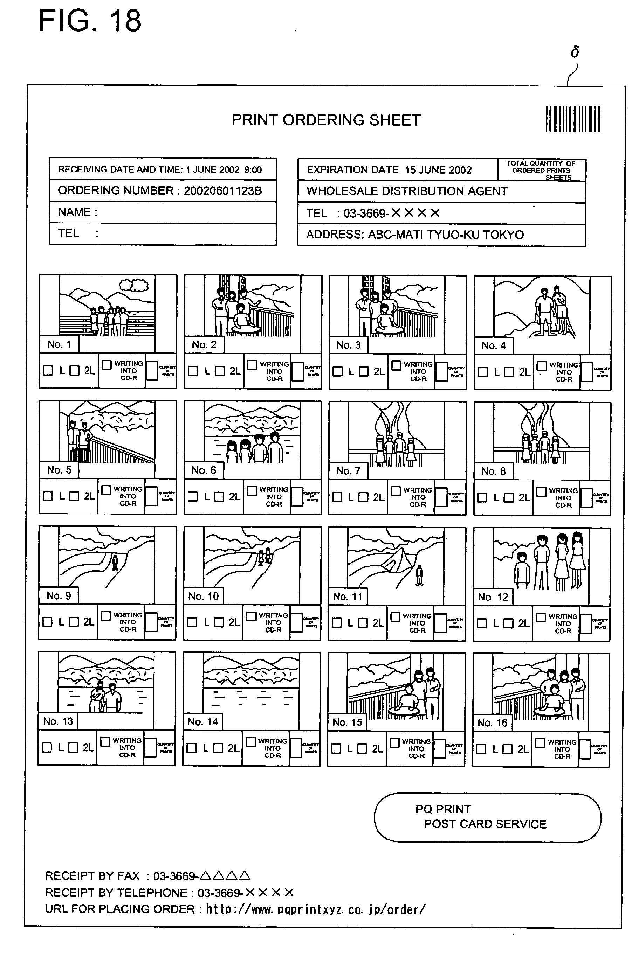

Still further, since the print ordering sheet for ordering prints of the image data includes thumbnail images, which are printed like index prints, shown in FIG. 18, the customer can refer to the small printed images and specify the order, such as print size and quantity of prints. Additionally the index prints on the ordering sheet improves the effective utilization of the order sheet.

Still further, since the ordering number printed on the ordering sheet is very simple number of 4 - 5 digits, when the order is placed, the customer or the clerk can easily check or write the ordering number. Accordingly, when the customer places an order via telephone, using the ordering sheet previously issued by print ordering sheet issuing apparatus 101, the customer specifies the 4 - 5 digit ordering number, which assures almost error-free ordering of the prints.

In addition to this, the data recorded in the customer's information recording medium are stored in memory section 116 or the memory section of an external device, there is no need to deposit the information recording medium including the image data in the shop.

Still further, since print ordering sheet issuing apparatus 101 can record the data of medium A onto a CD-R loaded on media output section 114, there is no need to issue an ordering sheet using the medium A brought by the customer, that is, accidental erasing of data in medium A can be prevented. Additionally, since apparatus 101 makes a back-up of medium A on the CD-R loaded in media output section 114, it is possible to erase the data in medium A, allowing re-use of medium A. For subsequent orders, the order can be easily placed by the CD-R.

Additionally, the described contents concerning the present embodiment can be changed as long as it remains within the scope of the present invention.

For example, print ordering sheet issuing apparatus 101 of the present embodiment has media output section 114 for storing the recorded contents of the customer's information recording medium onto the CD-R, however, the print ordering sheet issuing apparatus of the present invention can be used without having this media output section 114. In the case of a print ordering sheet issuing apparatus not having media output section 114, steps SA2 and SA3 in the flowchart of FIG. 10 can be eliminated. Further, it is possible to integrate ordering sheet issuing apparatus 101 and order processing terminal 1.

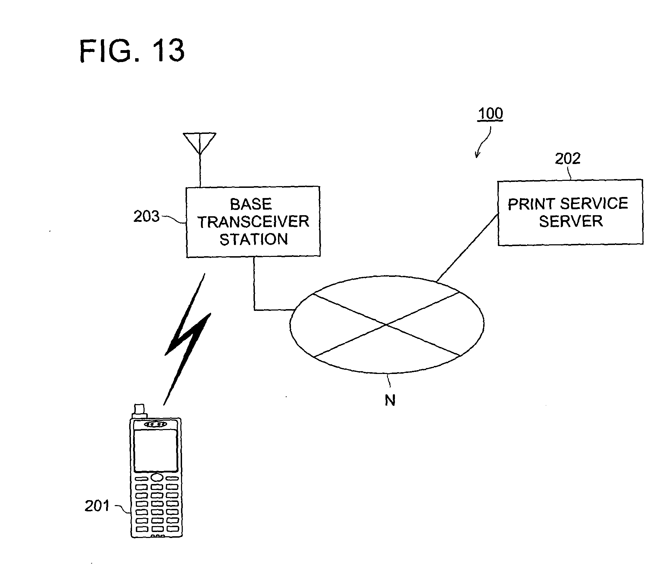

FIG. 13 schematically shows the total structure of print producing system 100 applying the present invention. Print producing system 100 is structured of cellular phone 201, print service server 202 and base transceiver station 203, shown in FIG. 13. Cellular phone 201 is connected to print service server 202 through base transceiver station 203 by communication network N.

Communication network N includes:
various communication circuits, such as a telephone circuit, ISDN (integrated services digital network), a leased circuit, a mobile communication circuit, a communication satellite circuit, and CATV (cable television) circuit; and
an Internet service provider which integrates the above described circuits.

FIG. 13 shows the case in which cellular phone 201 and print service server 202 are structured in an one-on-one correspondence, however, the actual print producing system, in which a single print service server 202 and plural cellular phones 202 are structured, can also be applied in the print producing system of the present invention.

Each section of print producing system 100 of the present embodiment will be detailed below.

Cellular phone 201 is structured of control section 211, input section 212, display section 213, wireless communication control section 214 having antenna 141, and transmitting-receiving section 215, each connected by BUS 216.

Control section 211 is structured of a CPU (central processing unit), RAM (random access memory) and ROM (read only memory).

The CPU in control section 211 performs various control operations, based on various processing programs stored in ROM, of cellular phone 201.

The RAM in control section 211 develops the processing programs, which were executed by the CPU, into program storing areas in the RAM, and also stores the inputted data and the processed results which were created when the above processing programs were executed, into a working area.

The ROM in control section 211 contains a system program which can be executed in cellular phone 201, various processing programs which can be executed in the system program, and data processed by the processing programs.

These programs are stored in the ROM as a form of program codes which are readable by the computer.

Input section 212, including a ten numeric key pad and various functional keys, outputs a signal created by a touched key to control section 211. Input section 212 functions as the specification means in the summary paragraph of the invention.

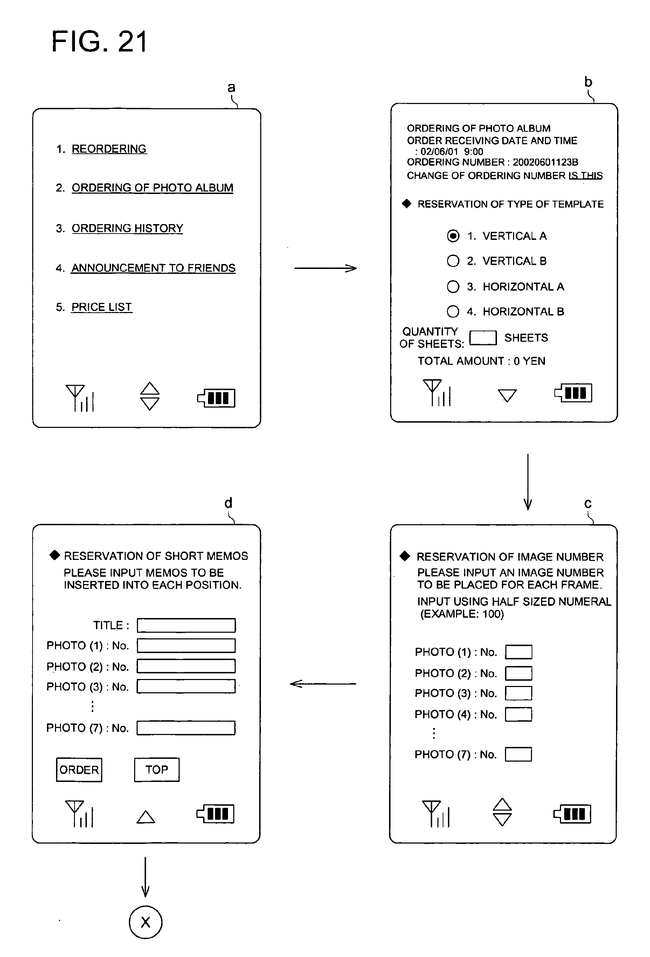

Display section 213, structured of a LCD (liquid crystal display) panel, performs the required display process, based on display signals inputted from control section 211. The examples displayed by display section 213 are shown in FIGs. 21 - 23.

Wireless communication control section 214, having antenna 141, performs communication protocol between the cellular phone and base transceiver station 203, and transmits or receives audio data, or performs data communication. Wireless communication control section 214 functions as the transmitting means described in the summary paragraph of the invention.

Voice transmitting-receiving section 215 is structured of a microphone, a speaker, an A/D conversion section, and a D/A conversion section. Wireless communication control section 214 conducts A/D conversion of the customer's voice inputted via the microphone, and outputs the transmitting audio data onto control section 211. Further, wireless communication control section 214 conducts D/A conversion of the transmitting audio data inputted from control section 211, and outputs the voice via a speaker.

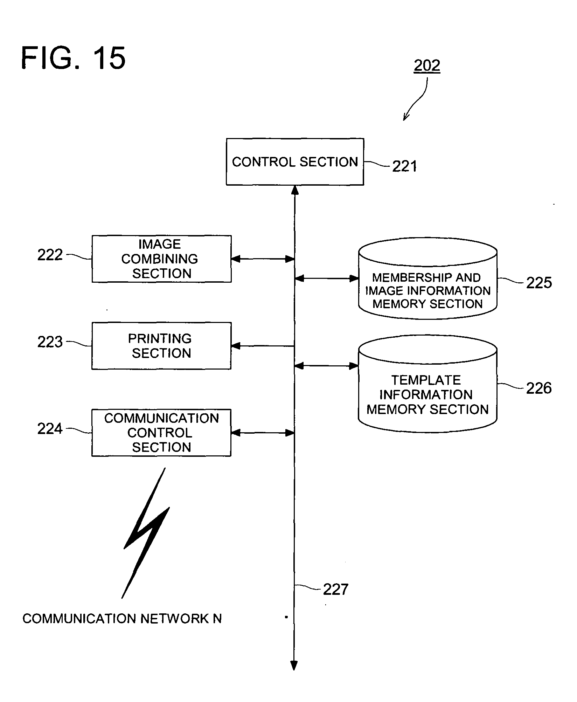

Print service server 202 shown in FIG. 13 is structured of control section 221, image combining section 222, printing section 223, communication control section 224, group member and image information memory section 225, and template information memory section 226, each connected by BUS 227, shown in FIG. 15. Each section of print service server 202 is structured integrally. Otherwise, each section, having a communication section, can be structured as a separated manner, and can even be dispersed on communication network N.

Control section 221 is structured of CPU, RAM, and ROM. The CPU in control section 221 performs various control operations, based on the various processing programs for print service server 202, stored in the ROM.

The RAM in control section 221 develops the processing programs executed by the CPU, onto a program storing area in the RAM, and also stores the inputted data and the processed results which were created when the above processing programs were executed, into the working area.

The ROM in control section 211 contains a system program which can be executed in print service server 202, print producing programs which can be executed in the system program, and data used by the print producing programs.

These programs are stored in the ROM in the form of program codes which are readable by the computer.

Specifically, after the print ordering sheet for the image data of the customer having cellular phone 201, is issued, and additionally, ordering number allocated to the ordering sheet is created, control section 221 sends a service guidance mail of the created ordering number to the cellular mail address of cellular phone 201.

Based on the order contents from the customer having cellular phone 201 for producing a photo-album, control section 221 reads out template data and the image data, both specified by the order contents, from template information memory section 226 and group member and image information memory section 225. Then control section 221 orders image combination section 222 to combine the image data onto the template data.

Further, when the photo-album is created by the image combination in image combination section 222, control section 221 orders printing section 223 to print out the created photo-album. Control section 221 functions as the reading-out means described in the summary paragraph of the invention.

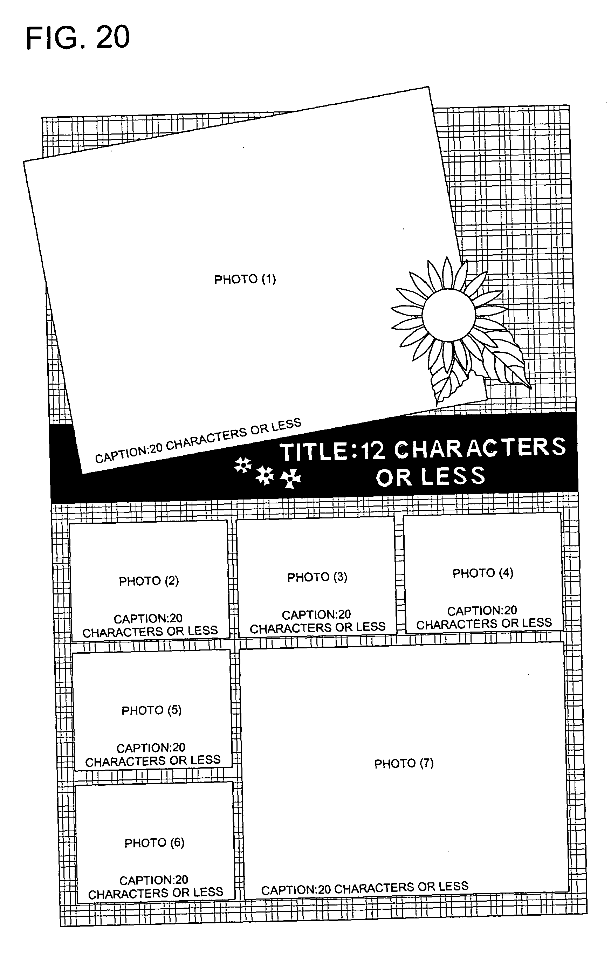

Image combination section 222 executes the image combination process to combine the specified images onto the specified template, based on control signals from control section 221. For example, image combination section 222 combines the specified images, onto each image frame (photo (1), photo (2), ----) in the template for producing the photo-album (see FIG. 20). Image combination section 222 functions as the print producing means, described in the summary paragraph of the invention.

Printing section 223 includes a sheet supplying section and a sheet receiving section, neither of which is not illustrated, and prints out the photo-album sheets onto printing sheets, based on the control signals from control section 221. As the printing method of printing section 223, an ink-jet method, a thermal-transfer printing method, a laser-ray method, a dye sublimation printing method, and a TA method, may be used as appropriate.

Communication control section 224 is structured of a MODEM, a terminal adapter, and a LAN adapter. Communication control section 224 performs the communication control for communicating to cellular phone 201 or other external devices via a communication network. Communication control section 224 functions, working with control section 221, as the receiving means described in the summary paragraph of the invention.

Group member and image information memory section 225, having the hard disk, stores the image data received from each group member registered in the print service, the various processing programs required for the service, and the data required for the various processing programs.

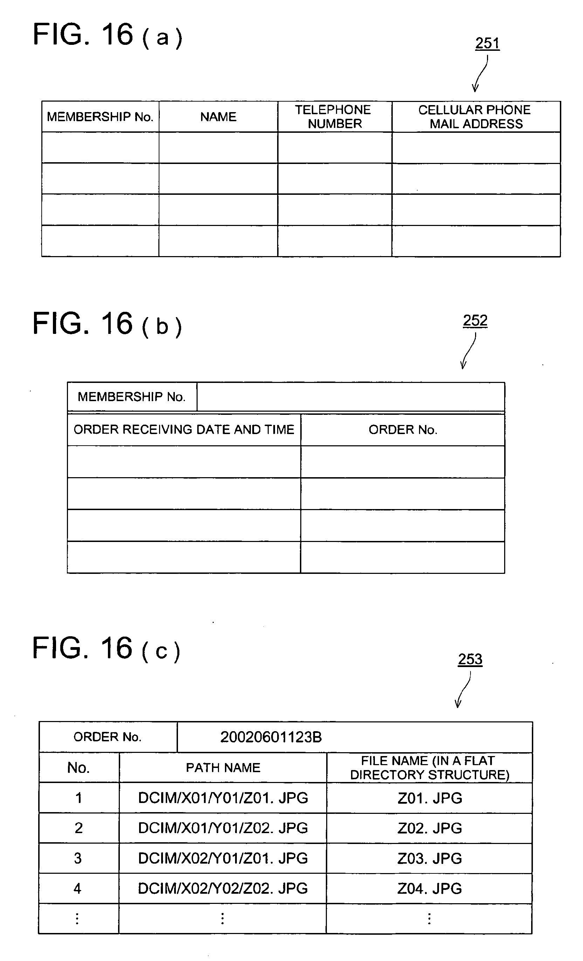

These processing programs and the data required for the processing programs can be re-written form the external devices via communication control section 224. Further, group member and image information memory section 225 stores image data information 253 (see FIG. 16(c)) to control the image data received from each member. The contents memorized in group member and image information memory section 225 can also be stored into other devices via communication control section 224.

Group member information 251 includes information about the group members who are registered in the print service. As shown in FIG. 16(a), group member information 251 includes "membership No.", "name", "telephone number" and "cellular phone address", corresponding to each other.

In group member information 251, the item "membership number" memorizes the membership number allocated to each group member registered on the print service, the item "name" memorizes the name of each group member, the item "telephone number" memorizes the telephone number (or the cellular phone number) of each group member, and the item "cellular phone mail address" memorizes the E-mail address set in the cellular phone of each group member.

Ordering sheet issuing history 252 is history of the ordering sheets which were issued for ordering the various processes (such as printing, writing into an information recording medium, or producing a photo-album), conducted onto the image data of each group member. As shown in FIG. 16(b), "order receiving date and time", and "ordering number", both corresponding to each membership number, are stored in ordering sheet issuing history 252.

In ordering sheet issuing history 252, the item of "order receiving date and time" memorizes the date and time of receiving the order to conduct various processes onto the image data. The item "ordering number" memorizes the ordering number, which was allocated by control section 221, when the ordering sheet was issued in order to conduct the various processes with the image data.

In image data information 253, information about the image data received from each group member is stored. As shown in FIG. 16(c), "No.", "path name" and "file name (in the flat structure)", corresponding to each ordering number, are stored.

In image data information 253, the item "No." stores the image number allocated to each file in the image data. Each image number set in the item "No." is a unique number set in a single ordering number, and these image numbers are to be printed on the ordering sheet for conducting the various processes onto the image data (see FIG. 18).

In image data information 253, the item "path name" memorizes the directory path of each image file in the image data received from each group member. The item "file name" memorizes the file name which was allocated for specifying each image file in the item "path name". The file name set in the item "file name (in the flat structure)" is the file name, is the file name when the directory structure of the image data received from each group member was re-constructed to the flat directory structure.

Further, group member and image information memory section 225 memorizes the number of times concerning the received orders of the template for producing the photo-album for each ordering number.

Template information memory section 226, stores the template number, the type of template, and template data, corresponding to each other, as information of the template for producing the photo-album. The template number shows the number for identifying each template. The template data include data of decoration images (pictures of plants, animals, or various patterns), and position data of each image frame in the template. The contents stored in template information memory section 226 can be stored in other devices via communication control section 224.

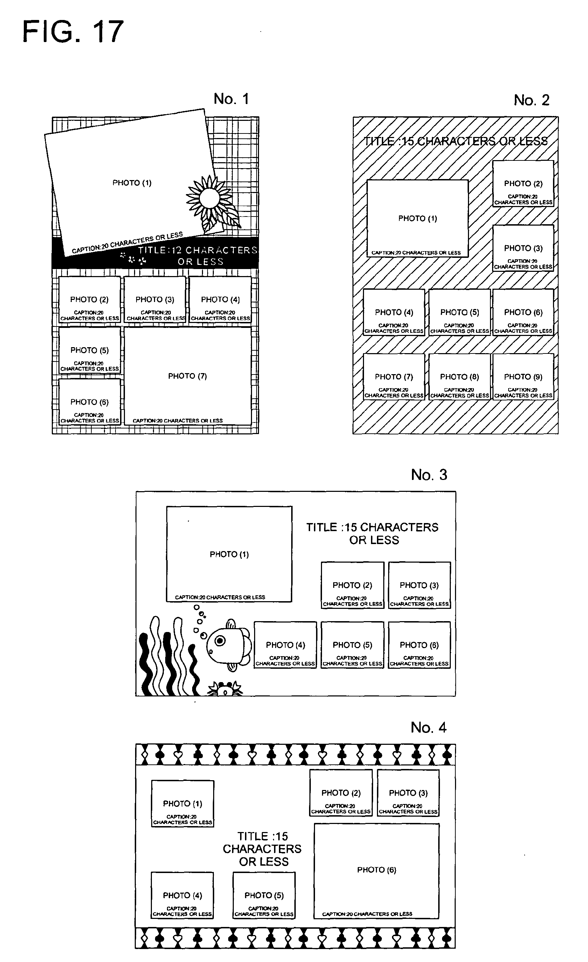

FIG. 17 shows examples of templates for producing the photo-album. Four types of templates are shown in FIG. 17, which differ with respect to the layout of the image frame, the decorative images, and the printing format (vertical or horizontal). Nos. 1, 2, 3, and 4 mean the template numbers, while No. 1 is vertical A, No. 2 is vertical B, No. 3 is horizontal A, and No. 4 is horizontal B.

Both group member and image information memory section 225 and template information memory section 226 function as the memory means described in the summary paragraph of the invention.

In FIG. 13, base transceiver station 203 performs the communication protocol for the cellular phone by the predetermined communication method, between its own installation location and cellular phone 201 existing in the transmittable scope.

Next, to be detailed is the issuing process of an ordering sheet, which is conducted by ordering sheet issuing apparatus 101, offering the print service, installed in the photo specialty store or the wholesale distributing agent.

When the image data, which are necessary for image data processing, have been inputted into ordering sheet issuing apparatus 101, ordering sheet issuing apparatus 101 allocates a unique ordering number to the inputted image data, and also allocates image numbers to each image file in the inputted image data, to identify each image file. The image data, inputted into ordering sheet issuing apparatus 101, includes not only the image data recorded in the information recording medium of the user having cellular phone 201, but also the image data which were digitalized from the photographic images recorded in the film or the print.

Next, ordering sheet issuing apparatus 101 produces the thumbnail images of each image file in the inputted image data, and prints out ordering sheet δ shown in FIG. 18. Printed are the ordering number at the upper left, and the thumbnail images in the central area, on ordering sheet δ, and image numbers (NO.1, No.2, ---) for specifying an individual image, are printed under each thumbnail image.

Next, ordering sheet issuing apparatus 101 makes the display section to display the screen to input a membership number of the user of cellular phone 201. The membership number means is a number which is allocated to each group member who was registered onto the print service system by a group member registration procedure, to be described later. After the membership number of the user is inputted, ordering sheet issuing apparatus 101 sends group member number, ordering number and the inputted image data to print service server 202, via communication network N. Timing of inputting the membership number is not limited, that is, when the image data are inputted, the membership number can also be inputted simultaneously.

The user of cellular phone 201 writes necessary information on ordering sheet δ, issued by order processing terminal, after which, the user can place an order for photo printing or writing on the information recording medium. Further, the user can obtain a template in FIG. 17 for producing a photo-album at the specialty store or wholesale distributing agent, offering the print service, or obtain the template from an advertisement folded in a newspaper. Then the user can place an order to have a photo-album produced, using ordering sheet δ and the template. In the following description, the photo-album is ordered based on template No. 1, which is a vertical type, selected from among the templates in FIG. 17.

FIG. 20 details template No.1. On the template in FIG. 20, a decorative background pattern is printed, and the numbers (Photo 1, Photo 2, ----7) are allocated to show the position of the image frames. On this template, space for inputting a title is provided, and comments to explain the image to be printed in the image frame, can be inputted at the bottom of each image frame.

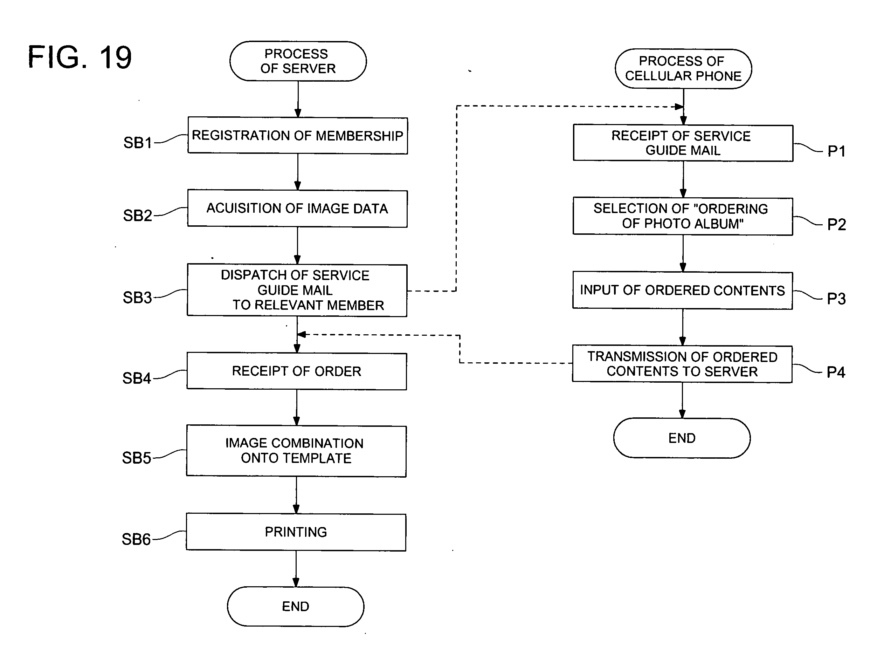

Referring to the flowchart in FIG. 19, the operations conducted between print service server 202 and cellular phone 201 will be explained.

The left flowchart in FIG. 19, showing the operation of print server 202, explains a program which makes the computer, integral with print service server 202, to perform each function. In this case, the program is stored in the ROM in the form of a program code which the CPU in control section 221 can read. However, there is no need to store the total functions, that is, a part of functions or total functions are received from communication control section 224, via communication network N, and the received functions can be employed.

Firstly, after control section 221 of print service server 202 obtains the essential information (name, telephone number, and cellular phone address) of the customer having cellular phone 201, who is to be registered as a group member for the print service system, control section 221 allocates a membership number to the customer, and registers the inputted user information into group member information 251 in group member and image information memory section 225 (step SB1). After user information is registered in group member information 251, control section 221 notifies the allocated membership number to the cellular phone address of cellular phone 201.

There are several methods for performing group member registration. For example, the user of cellular phone 201 brings a group member registration form, of which the necessary items have already been described, to the photo specialty store or the wholesale distributing agent, and sends the registered items to print service server 202, via the terminal in the shop. For another example, the user, who wants to register him/herself as a group member, submits the group member registration form by mail, on which the necessary items have been already described, to the service center where print service server 202 is installed, and then the service center inputs the registration contents to print service server 202, whereby the registration of the group member is completed.

After ordering sheet issuing apparatus 101 issues the ordering sheet, the order processing terminal obtains the membership number, ordering number, and the image data necessary for the image data processing (printing the photo image, writing the image on the image recording medium, and producing the photo-album), via communication network N (step SB2). Control section 221 reads out the cellular phone address corresponding to the membership number obtained in step SB2, from group member information 251, and sends a notification mail message of the print service to the above cellular phone address (step SB3). In this case, control section 221 registers the ordering number obtained in step SB2, and the image data, corresponding to each other into image data information 253. Further, control section 221 memorizes the order receiving date and time (the date and time of issuing the ordering sheet), and ordering number, corresponding to each other into ordering sheet issuing history 252 of the membership number, obtained in step SB2.

In the right side flowchart in FIG. 19, showing the operation of the cellular phone 201, a service notification mail message is received from print service server 202 (step P1). The user of cellular phone 201 reads the message, and selects a choice from the service menu on the display, then screen menu which is the top page of the service menu, shown in screen image "a" in FIG. 21, is displayed on display section 213. On this menu screen, the menu items are linked each other.

For example, for the section "1. reordering", a link to the page of reorder print is attached, for the section "2. ordering of photo-album", a link to the page of ordering the photo-album is attached, and for the section "3. ordering history", a link to the page showing the various orders by the user of cellular phone 201 is attached. In the ordering history shown in the section "3. ordering history", the history of issuing the ordering sheet, stored in ordering sheet issuing history 252 in group member and image information memory section 225, is included.

For item "4. announcement to friends", a link to the page for explaining the service, served by print service server 202, to the acquaintances of the user of cellular phone 201, is attached. For item "5. price list", a link to the page showing the prices of each service served by print service server 202, is attached. When the screen shown in FIG. 21 is scrolled down, other menu items (for example, matters of liability, or where to call) are displayed, but which are not illustrated.

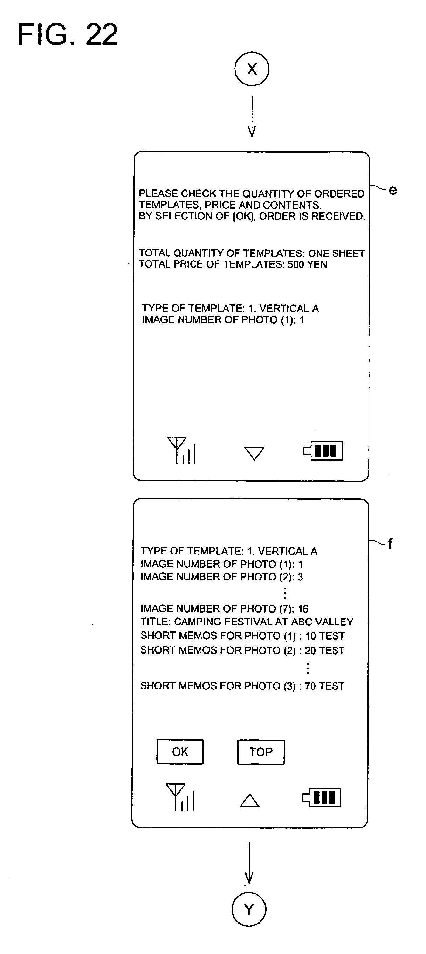

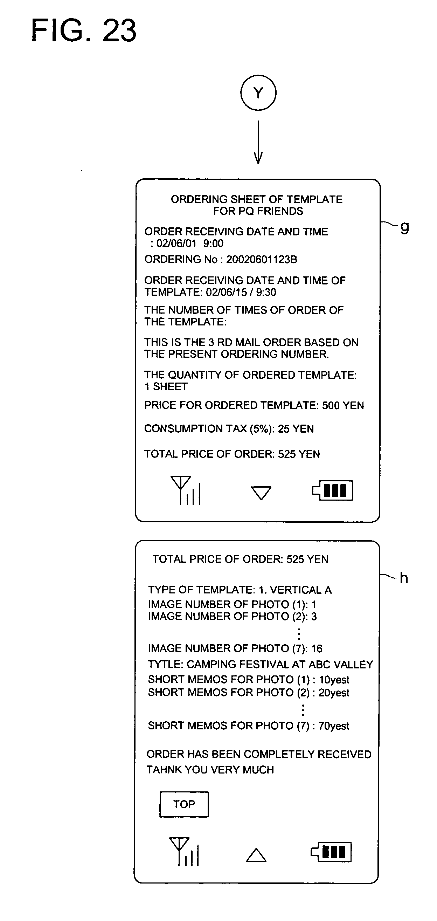

When the user selects item "2. ordering of photo-album" in screen image "a" of FIG. 21, using input section 212 (step P2), display section 213 displays photo-album ordering screen image "b" of FIG. 21, and the user inputs the order contents onto photo-album ordering screen image "b", using input section 212 (step P3). Referring to the display screen images, which are shown by symbols "a" and "b" of FIG. 21, symbols "e" and "f" in FIG. 22, and symbols "g" and "h" of FIG. 23, inputting of the order contents will be explained.

Firstly, on the screen image for ordering a photo-album, the order receiving date and time (the date and time of issuing the ordering sheet) for processing the image data as well as the ordering number is displayed. The screen image of "reservation of the type of template" is displayed, and the user is requested to choose the type of template for the photo-album, and also requested to input the quantity of the chosen templates. There are four types of templates, as shown in FIG. 17, and the user selects one from among them. In this case, the user selected template No. 1 which is a vertical type (see FIG. 20).

Once the type of template has been selected, the display screen is scrolled down, until the screen image of "reservation of image number" shown by screen image "c" of FIG. 21, is displayed. The user is requested to input the image numbers to be arranged in each image frame (photos 1, 2, ---) of the template of FIG. 20. The user then selects the images, from among the images on ordering sheet δ, to be placed into each image frame. For example, the user selects image No. 1 on ordering sheet δ, and places it onto the image frame corresponding to photo 1, after which, the user inputs the selected image number on display section 213.

After the image numbers of the images to be placed onto each image frame are inputted, and the screen is scrolled down further, "reservation of one sentence memo" is displayed, as shown in screen image "d" of FIG. 21. The user is requested to input the title of the photo-album to be produced, as well as the one sentence memo to be placed onto each image frame. For inputting the title or one sentence memo, form sentences, previously stored in cellular phone 201, can be used.

After the one sentence memo in screen image "d" in FIG. 21 has been inputted and the "order" button has been selected, display section 213 displays a confirmation screen of the ordered contents, previously inputted on screen images "b", "c", and "d". The user confirms the contents and selects the "OK" button (see FIG. 22), after which the ordered contents inputted in the above procedure are forwarded to print service server 202 (step P4).

Control section 221 of print service server 202 then performs the order receiving process, using the order content data received from cellular phone 201 (step SB4 of FIG. 19). Print service server 202 produces the template ordering sheet, based on the received order content data, and sends the produced template ordering sheet back to cellular phone 201. The template ordering sheet, which was sent from print service server 202, is displayed on display section 213 of cellular phone 201, shown in FIG. 23.

The date and time for receiving the order of the image processing (the date and time for issuing the ordering sheet), ordering number, the date and time of receiving the order of the template, the number of times of receiving the orders of template, the quantity of the ordered templates, the price of the order, the type of the template, the image numbers to be placed onto each image frame, the title and the one sentence memo to be placed on each image are all displayed on the template ordering sheet, shown in FIG. 23. "Date and time of receiving the order of the template" means the date and time of placing an order of the photo-album.

After receiving the order for producing a photo-album in step SB4, control section 221 of print service server 202 reads out the data of the template specified by the order contents, and also reads out the image files (which are the individual image data) of the corresponding image numbers, from image data information 253 in group member and image information memory section 225. Further, control section 221 outputs control signals for combining the image data of the specified image numbers onto each image frame in the read-out template, to image combining section 222. Image combining section 222 then carries out the image combining process, based on the control signals from control section 221 (step SB5).

In the image combining process of step SB5, image combining section 222 reads out, from image data information 253, the image files of the image numbers allocated to each image frame in the template, after which, it places the read-out image files (the image data) onto the corresponding image frames.

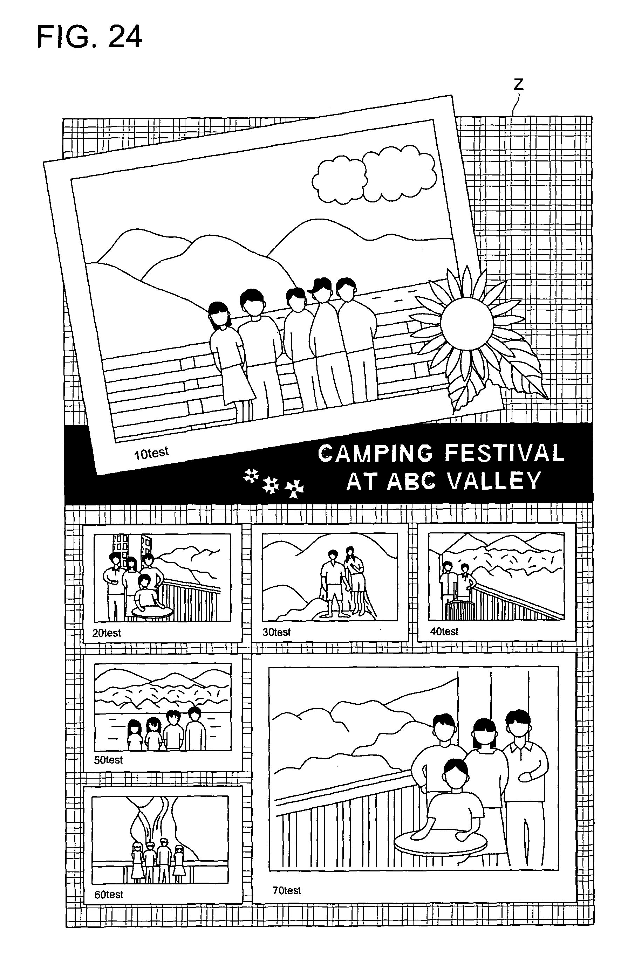

After the photo-album is produced by the image combining process in step SB5, control section 221 outputs, to printing section 223, the control signal for printing the produced photo-album, and printing section 223 prints the photo-album (step SB6), based on the control signals from control section 221. FIG. 24 shows an example of photo-album "Z" which was printed, based on the received contents in step SB4.

Photo-album "Z", printed in step SB6, is mailed to the address which was specified by the user of cellular phone 201. Further, the user of cellular phone 201 or other interested persons can also receive photo-album "Z" at the store front of the photo specialty or wholesale distributing agent, offering the print service.

Based on print producing system 100 of the present embodiment, by using a template for producing a photo-album, as well as ordering sheet δ on which the thumbnail images were printed, the user can place an order for a photo-album via cellular phone 201. Accordingly, even customers, who do not have the personal computer nor use the personal computer, can easily place an order for a photo-album. Therefore, the photo service via a cellular communication terminal, such as cellular phone 201, provides a unique service.

As shown in FIG. 18, by using ordering sheet δ on which the thumbnail images were printed, the user of cellular phone 201 can easily check which images will be placed into each image frame in the template. Further, by using ordering sheet δ on which the thumbnail images were printed, the user can also place an order for producing a photo-album, without displaying the individual images on display section 213 of cellular phone 201.

Still further, the decoration images previously printed on the template for producing the photo-album, and the desired title and comment for each image can be chosen, whereby, it is possible to create a very unique and personal photo-album.

The described contents of the present embodiment are not limited as long as they meet the purpose of the present embodiment. For example, the user places an order of a photo-album via cellular phone 201, however it is also possible to place an order via a hand-carry information terminal, such as a PDA (Personal Digital Assistant). It is further possible to create not only a photo-album but also a post card, a greeting card or a business card, employing the above-described methods.

Featured effects of the inventions are described below.

When a group member desires to order prints via a predetermined process from the member's common image data, blank spaces for identification of the group member is provided, and an ordering sheet on which the control information has been pre-recorded is issued, whereby, each member of the group can place an order at his/her requested time, without obligating any other member of the group.

When a group member desires to order prints via the predetermined process from the member's common data, a fill-in space for identifying information of the member is provided, and the ordering sheet on which the control information has been pre-recorded is issued, whereby, each member of the group can place a print order at his/her convenience, without obligating any other member of the group.

Each member of the group can place an order from the member's common data, without obligating any other member of the group.

Each member of the group can also place an order of recording the member's common data onto an information recording medium, without obligating any other member of the group.

It is also possible to issue an ordering sheet on which the thumbnail images of the common image data are printed, and the member placing an order can easily check the images being ordered, at the time the order is placed.

Since recorded are the thumbnail images of image data commonly shared by the group or the icon, or the icon for common document data shared by the group, and the control information corresponding to the identification information of the predetermined group with the member's common data, when any member of the group places an order for image data prints, or document data prints, using the print ordering sheet, the member can easily check the requested data prior to printing.

It is possible to issue the ordering sheet on which the identification information of the data recorded on the information recording medium is printed, and thereby when a member placing an order fills in the order contents on the issued ordering sheet, the member can easily check what is being ordered. Specifically when a plurality of data are recorded on the information recording medium, it is possible to issue the ordering sheet on which a list of the identification information of each datum is printed, which further improves the effectiveness and efficiency of the ordering sheet issuing apparatus.

Since the ordering sheet, on which the thumbnail images of the image data recorded in the information recording medium, are printed, when the customer writes in the order contents on the issued ordering sheet, the customer can easily check which images are being ordered.

The apparatus can issue the ordering sheet on which the document name and icon of the document data, recorded in the information recording medium, are printed, which further improves the convenience of the ordering sheet issuing apparatus.

It is possible to place a print order by viewing a print sample in which the layout of the image frames have been determined, which enhances the print service using a personal communication terminal.

It is further possible to specify a title or comments to be placed on the individual images enclosed within the image frame, which makes it possible to produce very personalized prints.

Since the specification means specifies the image to be enclosed within the image frame, based on thumbnail images of the image data accessible by the user of a personal communication terminal, as well as the specification information of said thumbnail image, the user employing a personal communication terminal can easily check the images to be enclosed within the image frame of the print sample.

It is thus easy to place a print order via a personal communication terminal, based on thumbnail images of the image data possessed by the user of personal communication terminal, and specified information of said thumbnail image, which enhances the print service using personal communication terminals.

## Claims

1. A print ordering sheet for group members, which is used via a shop when the group member places an order for prints of photographed images stored in an information recording medium shared by the group members, comprising:
a displaying section for displaying a visual list of total printed images produced from the photographed images;
a print order assigning section attached for each printed image on the list;
a control information displaying section for displaying control information relevant to a group;
an identification writing section for writing identification information of the group member; and
an address displaying section for displaying a contact address of the shop which receives the print order from the member.

2. The print ordering sheet of claim 1,
wherein the identification writing section has a column for writing a name and a membership number of at least one of the group members.

3. The print ordering sheet of claim 1,
wherein the control information comprises
a group identification number for identifying the group, and
an image identification number for identifying the photographed images,
and wherein the group identification number and the image identification number are correspondent each other.

4. The print ordering sheet of claim 1,
wherein the print order assigning section has a column for writing a print size and the number of the prints to be ordered.

5. The print ordering sheet of claim 1,
wherein the print order assigning section has a column for producing an information recording medium including electronic data of the image to be printed.

6. The print ordering sheet of claim 1,
wherein the facsimile number of the shop is displayed in the address displaying section.

7. The print ordering sheet of claim 1,
wherein the telephone number of the shop is displayed in the address displaying section.

8. The print ordering sheet of claim 1,
wherein the E-mail address of the shop is displayed in the address displaying section.

9. The print ordering sheet of claim 1, further comprising an expiration date displaying section for displaying an expiration date of the print order.

10. The print ordering sheet of claim 1, further comprising an additional information displaying section for displaying additional information.

11. The print ordering sheet of claim 10, wherein the additional information is an advertisement of the shop or news of the district.

12. A printing order processing system, comprising:
a registration section for registering information about a group,
a control information generation section for generating control information which controls group information registered by the registration section and member's common data shared by members of the group,
a producing section for producing an ordering sheet data for ordering prints by performing predetermined process onto the member's common data, based on the control information and the member's common data shared by the members of the group, and
an outputting section for printing out an ordering sheet, based on the ordering sheet data,
wherein the producing section produces the ordering sheet data which includes blank columns for inputting the identification information of the members of the group, and on which the control information produced by the producing section has been recorded.

13. The printing order processing system in claim 12, further comprising:
a member's common data inputting section for inputting the member's common data shared by the members of the group.

14. The printing order processing system in claim 12, wherein the predetermined process to be performed onto the member's common data indicates a printing process from the member's common data, and the producing section produces the order receiving sheet data for ordering the printing process of the member's common data.

15. The printing order processing system in claim 12,
wherein the member's common data includes the image data, and
the producing section produces the ordering sheet data, using thumbnail images of the image data.
